# EUROPEAN PATENT APPLICATION

(11) **EP 2 192 727 A1**
(43) Date of publication of application: **02.06.2010**
(21) Application number: 08792465.0
(22) Date of filing: 14.08.2008
(51) Int. Cl.: H04L 12/56

(54) **MOBILE TERMINAL, RELAY EQUIPMENT AND MOBILE COMMUNICATION SYSTEM**

(30) Priority: 22.08.2007 JP 2007215885
(71) Applicant: Sharp Kabushiki Kaisha, Osaka-shi, Osaka 545-8522 (JP)
(72) Inventor: ARAMOTO, Masafumi, Osaka 545-8522 (JP)
(74) Representative: Müller - Hoffmann & Partner
(86) International application number: PCT/JP2008/064584
(87) International publication number: WO 2009/025232

(57) **Abstract**

A UE10 receives a PDN ID by an Attach Procedure. A Serving GW20 receives address creation information and a PDN ID from a PDN-GW and stores these. At this point, when UE10 transmits a Router Solicitation message including a PDN ID to Serving GW20, Serving GW20 transmits a Router Advertisement message including the PDN ID. UE10 having received the Router Advertisement message, creates an IP address from the Router Advertisement message, and stores the IP address based on the received PDN ID. UE10 determines an IP address in association with the PDN to be communicated and performs communication. As a result, it is possible to provide a mobile communication terminal etc., which, when the mobile communication terminal acquires IP addresses from a plurality of networks, can perform appropriate communications by making each network correspond to an IP address in a correct manner.

## Description

### Technical Field

The present invention relates a mobile terminal, a forwarding intermediate node and a mobile communications system.

### Background Art

Conventionally, various kinds of mobile communications networks to which mobile communications terminals such as cellular phones etc. are connected have been known. Among those, the architecture and detailed functionality of a mobile communications system extended from the third generation mobile communications system have been developed and standardized as (SAE: System Architecture Evolution) in the 3rd Generation Partnership Project (3GPP).

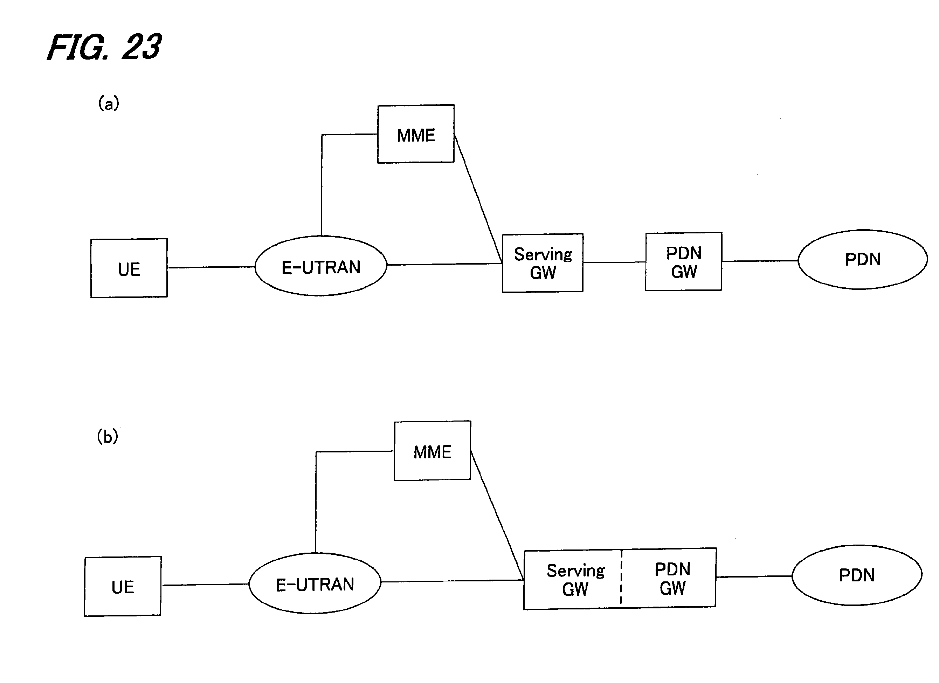

In SAE, as shown in the schematic diagram of FIG. 23(a), an architecture of a network to which a mobile terminal (UE: User Equipment) is connected via an E-UTRAN access system is defined as one example of radio-access access systems. As described in non-patented document 1, the architecture is shown by the specification TS23. 401 issued by 3GPP. Also, the radio access system or the E-UTRAN access system is described in TS36.300 presented as non-patented document 2.

Also in TS23.401 defining the standards of SAE, the connection procedure of a UE is defined. Giving an outline of the connection procedure, when a UE makes radio access to an E-UTRAN access system, authentication and establishment of a data transmission path are carried out by a MME (Mobility Management Entity) as an apparatus for managing the movement of UEs, a PDN-GW (Packet Data Network Gateway) serving as a gateway to the PDN (Packet Data Network) and a Serving GW (Serving Gateway) as a forwarding intermediate node. This series of procedures is described in TS23.401 by giving the detail of the sequence as an Attach Procedure. The PDN is a service network operated by a network operator, or indicates an operator's network.

For example, when the network operator provides a WEB service, a WEB server is installed inside the PDN and a UE of a service subscriber tries to make access. The UE is authenticated by the Attach Procedure, and a data transmission path is established between the MME, Serving GW and PDN-GW so that the UE can connect to the PDN.

It is specified that a PDN-GW and Serving GW may be realized by different apparatuses as shown in FIG. 23(a), or may be realized by a forwarding intermediate node of a single apparatus as shown in FIG. 23(b). The data transmission path in this case is established between the MME and the PDN-GW so that the UE can connect to the PDN.

After the Attach Procedure, the UE acquires an IP address assigned by the PDN-GW. As the IP address acquisition means, two methods that have been widely used in the Internet can be used. One is a method of acquiring an IPv4 address using a DHCP (Dynamic Host Configuration Protocol) and the other is method acquiring an IPv6 address based on IPv6 stateless address configuration.

These specifications are standardized by the IETF (The Internet Engineering Task Force) as a standardizing agency of the Internet technologies. As to the IPv4 address acquisition procedure with a DHCP is shown in RFC2131 (non-patented document 3) and the IPv6 stateless address configuration is shown in RFC2462bis (non-patented document 4).

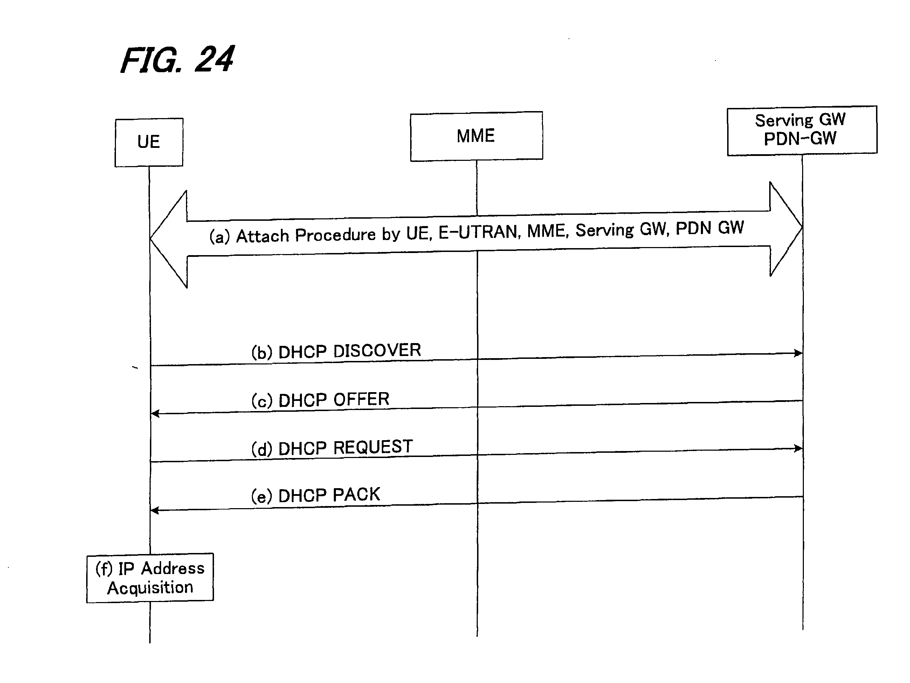

FIG. 24 shows one exemplary case where an IP address is acquired by a DHCP when the Serving GW and PDN-GW are given in a single apparatus. After the Attach Procedure (FIG. 24(a)), the UE exchanges "DHCP DISCOVER message" (FIG. 24(b)), "DHCP OFFER message" (FIG. 24(c)), "DHCP REQUEST message (FIG. 24(d)) and "DHCP PACK message " (FIG. 24(e)), with the PDN-GW to be a DHCP server to thereby acquire an IP address based on IPV4 address information included in "DHCP PACK message" (FIG. 24(f)). Here, FIGS. 24(b) to 24(e) form the DHCP address setting procedure in IPv4.

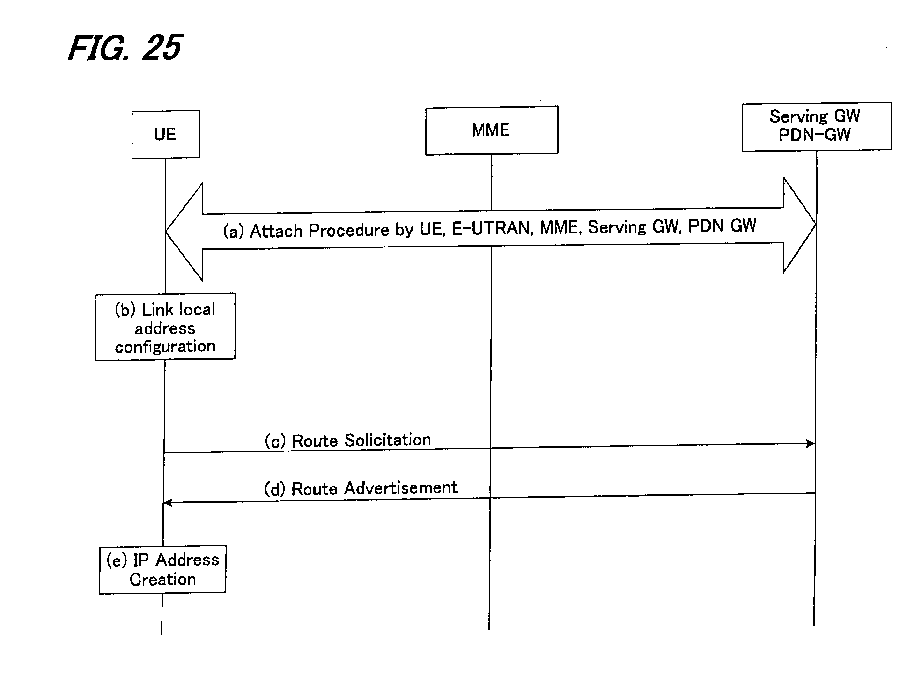

FIG. 25 shows an example of creating an IP address by the IPv6 stateless address configuration when the Serving GW and PDN-GW are given in a single apparatus. After the Attach Procedure (FIG. 25(a)), an "IPv6 Link-local address" that is not redundant within the link is created. Then, the PDN-GW transmits to the UE, address creating information including network prefixes etc. required for creating an IPv6 address by means of a "Router Advertisement message" (FIG. 25(d)). Based on the address creating information, the UE creates an IPv6 address (FIG. 25(e)). Further, in order to request a "Router Advertisement message", the UE may send a "Router Solicitation message" (FIG. 25(c)). Here, FIG. 25(c) and 25(d) form the stateless address configuration procedure in IPv6.

In TS23.401 that defines the standards of 3GPP, no address acquisition sequence is defined when the Serving GW and the PDN-GW are provided as separate apparatuses.
Non-patented document 1: TS23.401 GPRS enhancements for E-UTRAN access (Release 8)
Non-patented document 2: TS36.300 "Evolved Universal Terrestrial Radio Access (E-UTRA) and Evolved Universal Terrestrial Radio Access (E-UTRAN); Overall description; Stage 2"
Non-patented document 3: RFC2131 "Dynamic Host Configuration Protocol"
Non-patented document 4: "IPv6 Stateless Address Autoconfiguration" draft-ietf-ipv6-rfc2462bis-08

### Disclosure of Invention

### Problems to be Solved by the Invention

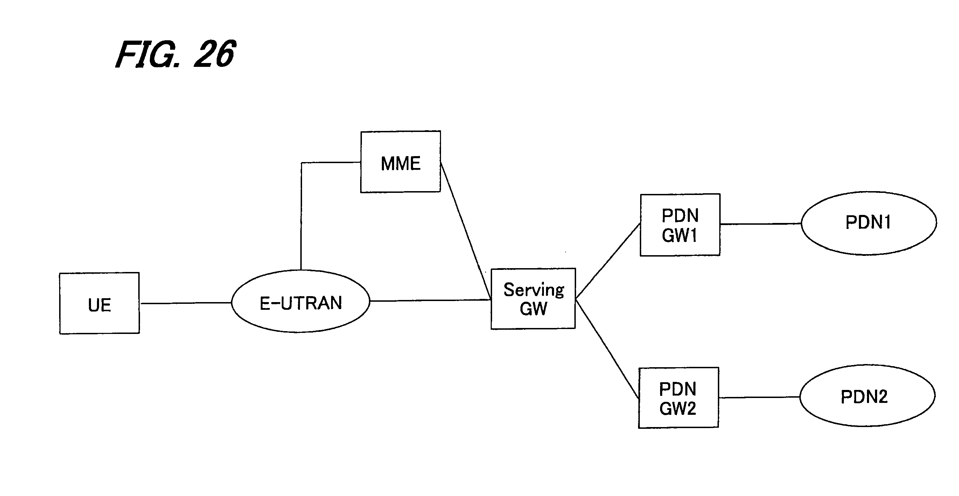

The network operator is permitted to have a plurality of PDNs, which are assigned for individual services. In this case, a plurality of PDNs are provided as shown in FIG. 26, and each PDN accesses the Serving GW by way of an individual PDN-GW connected thereto. With this configuration, the network operator can provide, for example a PDN for installing a WEB server etc., a PDN for installing a mail server etc., separately, hence it is possible to distribute traffics from the Serving GW in accordance with the applications the UE tries to connect.

The model having a plurality of PDNs connected thereto in this way is called a Multiple PDN model. In the case of a Multiple PDN model, the UE needs to acquire an IP address that is assigned by each PDN-GW. That is, the UE holds a plurality of IP addresses and uses different IP addresses for different applications.

For example, the UE uses a IP address assigned from PDN-GW1 connected to PDN1 in a case of WEB access, and uses a IP address assigned from PDN-GW2 connected to PDN 2 for exchange of mails.

In the prior art, the procedure for acquiring each of the addresses is performed based on the DHCP or IPv6 stateless address configuration as shown in FIGS. 24 and 25. However, there occurs a case in which, as shown in FIG. 27, the Attach Procedure for PDN-GW1 (FIG. 27(a)) and the Attach Procedure for PDN-GW2 (FIG. 27(b)) are executed in parallel. In this case, the address acquisition procedure from PDN1 (FIG. 27(c)) and the address acquisition procedure from PDN2 (FIG. 27(d)) will also be performed in parallel.

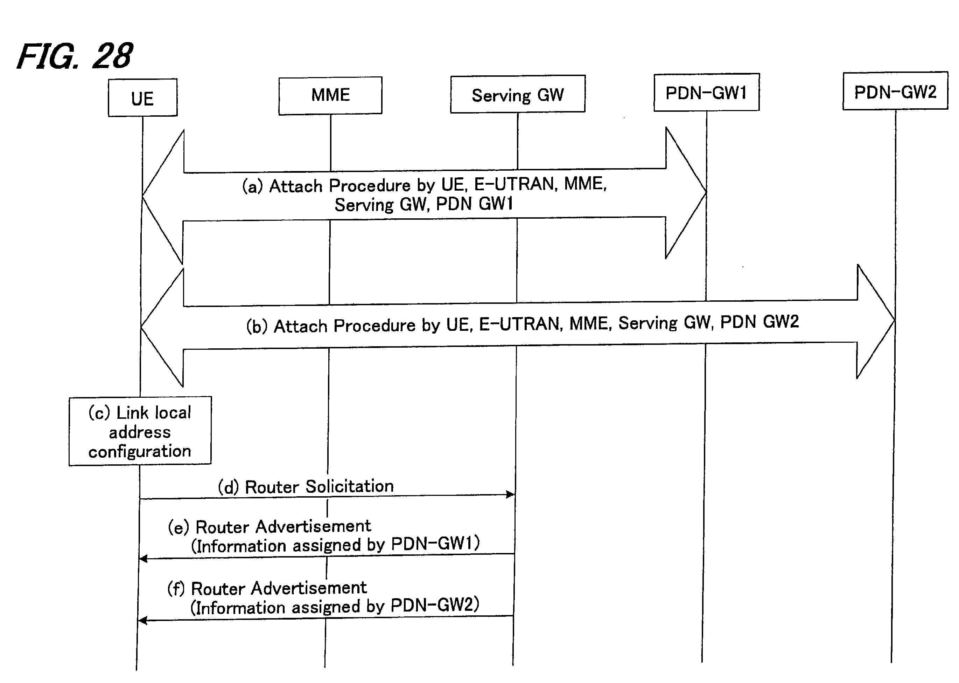

Description will be made taking an example of acquiring IPv6 addresses in FIG. 28. In the model including multiple PDN-GWs, after the Attach Procedures of FIGS. 28(a) and 28(b), a Link local address is configured (FIGS. 28(c)). Then, a "Router Solicitation message" sent by the UE is received by the Serving GW (FIGS. 28(d)).

At this stage, when the UE transmits a "Router Solicitation message" after the two Attach Procedures have been completed, it was impossible for Serving GW to determine which information assigned from the two PDNs should be used to make a reply to the UE. Because the message is received by all the routers on the link, the destination address of the "Router Solicitation message" uses a multi-cast address while the sender address is not specified or uses the link local address. As result, it is impossible to identify the PDN from the address in the IP header and the information from the "Router Solicitation message".

Further, when the Serving GW has solved the above problem by some unspecified manner and replies by sending a "Router Advertisement message" including information for creating an address assigned to PDN-GW1 and a "Router Advertisement message" including information for creating an address assigned to PDN-GW2 (FIGS. 28(e) and (f)), the senders of the two "Router Advertisement messages" are both the Serving GW. As result it was impossible for the UE to determine whether the network information included in each "Router Advertisement message" sent from the identical router is the information assigned from PDN-GW1 or the information assigned from PDN-GW2.

At this point, for each service presented by a PDN, the UE needs to perform communication using the IP address assigned by the PDN-GW. However, even if the UE performs two Attach procedures and acquires two addresses, the obtained IP addresses do not correspond to the PDNs as described above, so that it is impossible to find correspondence to the presented services, resulting in failure to establish communication.

The same problem occurs also in the IPv4 address acquisition by DHCP due to the same reason as in the case of the IPv6 stateless address configuration described above,.

In view of the above problem, it is therefore an object of the present invention to provide a mobile communication terminal and the like which, when the mobile communication terminal acquires IP addresses from a plurality of networks, can perform proper communications by making the correspondence between each network and the IP address correctly.

### Means for Solving the Problems

In view of the above problems, a mobile terminal of the present invention resides a mobile terminal connected to a mobile communications network that is connected to one or plurality of different operator networks, via a forwarding intermediate node, comprising: a communication means for performing communications with an operator network via a mobile communications network; a message receiving means for receiving a predetermined message from an operator network; an IP address acquisition means for acquiring an IP address from a message received by the message receiving means; an operator network determining means for determining an operator network that assigned the IP address, from the message received by the message receiving means; and, an operator-to-IP address storing means for storing the operator network determined by the operator network determining means in association with the IP address acquired by the IP address acquisition means, and is **characterized in that** the communication means reads out an IP address corresponding to an operator network as a communication destination, from the operator-to-IP address storing means and uses the IP address as an IP address of the mobile terminal to perform communications with the operator network.

A mobile terminal according to the present invention further comprises a network identification code receiving means for receiving a network identification code from the operator network, when the communication means establishes communication with the operator network; an operator-to-network identification code storing means for storing the network identification code received by the network identification code receiving means in association with the operator network; and a network identification code acquisition means for acquiring a network identification code from the message received by the message receiving means, and the operator network determining means determine the operator network based on the network identification code obtained by the network identification code acquisition means.

A mobile terminal according to the present invention is **characterized in that** the IP address is configured of an IPv6 address, the message receiving means is a means that receives a Router Advertisement message from the operator network, the IP address acquisition means is a means that acquires the IP address by creating the IP address based on the Router Advertisement message, and, the network identification code acquisitionmeans is a means that acquires the network identification code added to the Router Advertisement message.

A mobile terminal according to the present invention is **characterized in that** the IP address is configured of an IPv4 address, the message receiving means is a means that receives a DHCP PACK message from the operator network, the IP address acquisition means is a means that acquires the IP address from the DHCP PACK message, and, the network identification code acquisition means is a means that acquires the network identification code added to the DHCP PACK message.

Further, a forwarding intermediate node according to the present invention resides in a forwarding intermediate node for relaying between one or plurality of different operator networks and a mobile communications network to which a mobile terminal is connected, comprising: an IP address information-to-network identification code storing means for receiving IP address information and a network identification code from an operator network and stores the IP address information in association with the network identification code; a message request signal receiving means for receiving a message request signal from a mobile terminal; and, a message transmitting means for, when a network identification code is added to the message request signal received by the message request signal receiving means, selecting the IP address information corresponding to the network identification code based on the IP address information-to-network identification code storing means and transmitting a message added with the network identification code to the mobile terminal.

A forwarding intermediate node according to the present invention is **characterized in that** the IP address information is IP address creation information for creating an IPv6 address in the mobile terminal, the message request signal receiving means is a means that receives a Router Solicitation message from the mobile terminal, and the message transmitting means is a means that adds the network identification code to the Router Advertisement message and transmits the message to the mobile terminal.

A forwarding intermediate node according to the present invention is **characterized in that** the IP address information is an IP address assigned from the operator network to the mobile terminal.

A forwarding intermediate node according to the present invention resides in a forwarding intermediate node for relaying between one or plurality of different operator networks and a mobile communications network to which a mobile terminal is connected, comprising: a network identification code storing means for, when establishing communications with an operator network, receiving a network identification code from the operator network and storing the identification code in association with the operator network; a message request signal receiving means for receiving a message request signal from a mobile terminal; an IP address information request signal transmitting means for, when a network identification code is added to the message request signal received by the message request signal receiving means, transmitting an IP address information request signal to an operator network corresponding to the network identification code; an IP address information receiving means for receiving IP address information from the network operator; and, a message transmitting means for transmitting a message including the IP address information received by the IP address information receiving means and the network identification code, to the mobile terminal.

Further, a mobile communications system according to the present invention resides in a mobile communications system comprising: one or plurality of different operator networks; a mobile communications network; a forwarding intermediate node for relaying between operator networks and the mobile communications network; and a mobile terminal connected to the mobile communications network, the forwarding intermediate node comprising: an IP address information-to-network identification code storing means for receiving IP address information and a network identification code from the operator network and storing the IP address information in association with the network identification code; a message request signal receiving means for receiving a message request signal from the mobile terminal; and, a message transmitting means for, when a network identification code is added to the message request signal received by the message request signal receiving means, selecting IP address information corresponding to the network identification code based on theIP addressinformation-to-networkidentification code storing means and transmitting a message added with the network identification code to the mobile terminal, the mobile terminal comprising: a message request signal transmitting means for transmitting the message request signal added with the network identification code, to the forwarding intermediate node; a message receiving means for receiving the message added with the network identification code, from the forwarding intermediate node; an IP address acquisition means for acquiring an IP address from the message received by the message receiving means; a network ID code acquisition means for acquiring the network identification code from the message received by the message receiving means; and, an operator-to-IP address storing means for storing the operator network corresponding to the network identification code acquired by the network ID code acquisition means, in association with the IP address, wherein the mobile terminal reads out the IP address corresponding to the operator network as a communication destination, from the operator-to-IP address storing means and uses the IP address as the IP address of the mobile terminal to perform communications with the operator network.

### Advantage of the Invention

According to the present invention, in a mobile terminal connected to a mobile communications network that is connected to one or plurality of operator networks, via a gateway apparatus, a predetermined message from the operator network is received so that an IP address is obtained from the received message. At the same time, the operator network that assigned the IP address is determined from the received message. Then, the determined operator network is stored in association with the acquired IP address. Thus, the mobile terminal makes communication with the operator network, using the IP address corresponding to the operator network as the communication destination, as an IP address of the mobile terminal.

Accordingly, even if the mobile communications network is connected to different operator networks, it is possible to use a different IP address for each operator network, hence it is possible to perform communications with each operator network.

As a result, by associating a service or application for example to each operator network, it is possible to distribute loads of communications.

Further, according to the present invention, when determining an operator network, it is possible to determine the operator network by using the network identification code that is added to messages. Accordingly, the mobile terminal is able to determine the other communication end by using the network identification code without regarding to the order of procedures of received messages, hence it is possible to perform appropriate communications.

### Brief Description of Drawings

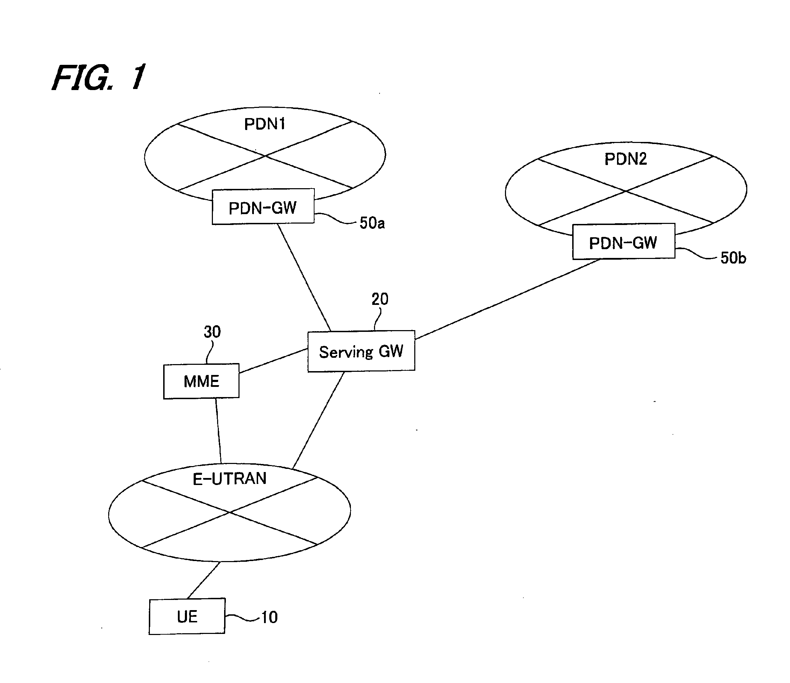

[FIG. 1] is a diagram showing the scheme of a mobile communications network in the present embodiment.

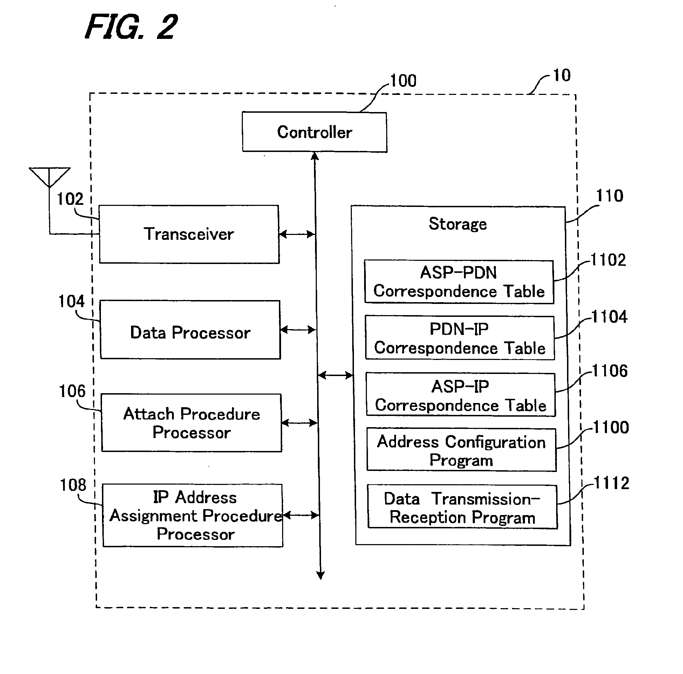

[FIG. 2] is a diagram showing one example of a UE configuration in the present embodiment.

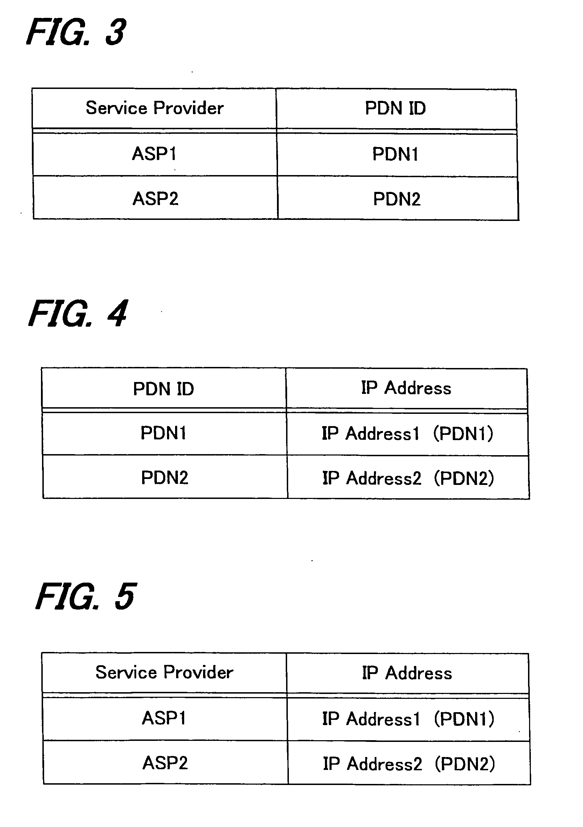

[FIG. 3] is a chart showing one example of a data configuration of an ASP-PDN correspondence table in the present embodiment.
[FIG. 4] is a chart showing one example of a data configuration of a PDN-IP correspondence table in the present embodiment.
[FIG. 5] is a chart showing one example of a data configuration of an ASP-IP correspondence table in the present embodiment.

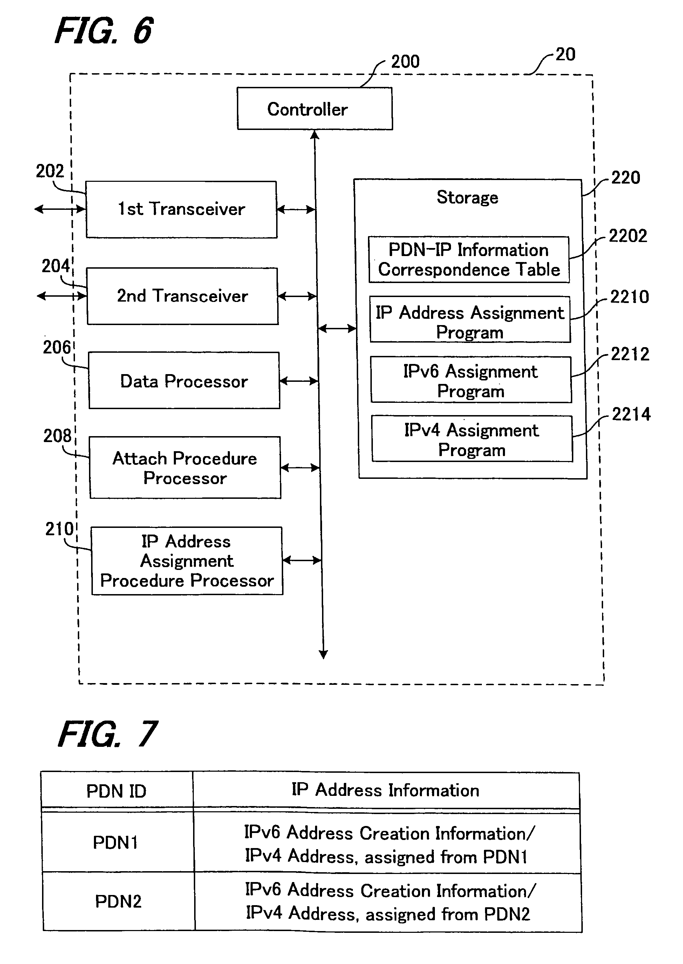

[FIG. 6] is a diagram showing one example of a Serving GW configuration in the present embodiment.
[FIG. 7] is a chart showing one example of a data configuration of PDN-IP information correspondence table in the present embodiment.

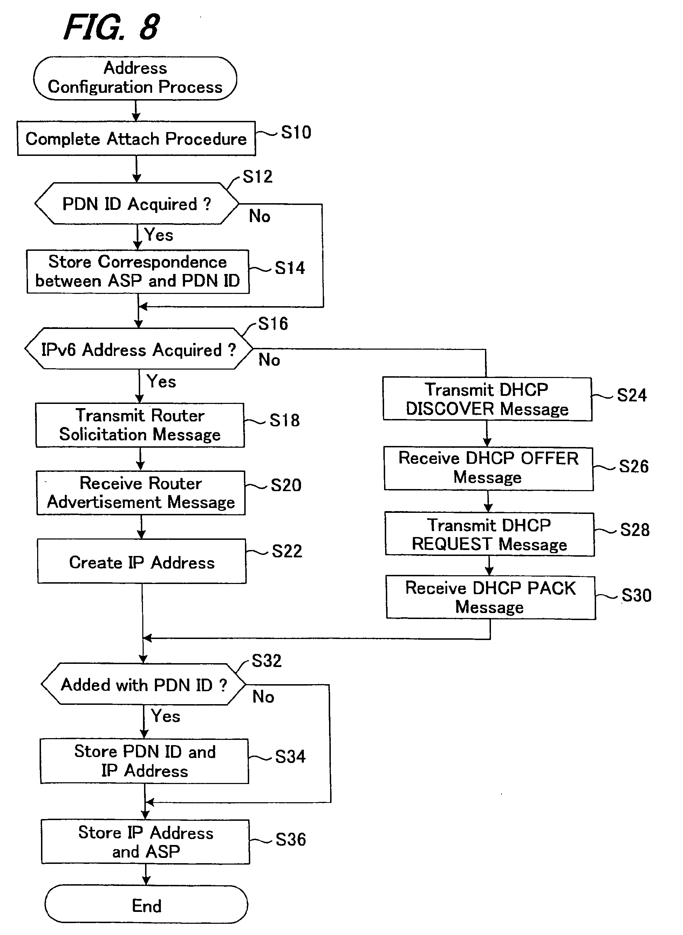

[FIG. 8] is a chart showing an operational flow of an address configuration process in the present embodiment.

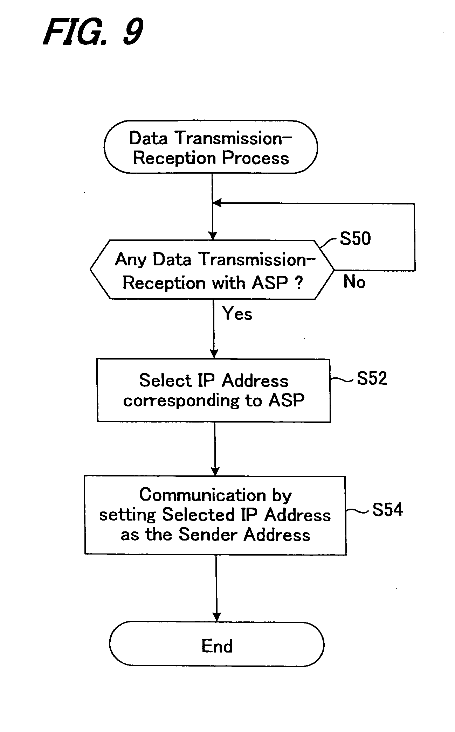

[FIG. 9] is a chart showing an operational flow of a data transmission and reception process in the present embodiment.

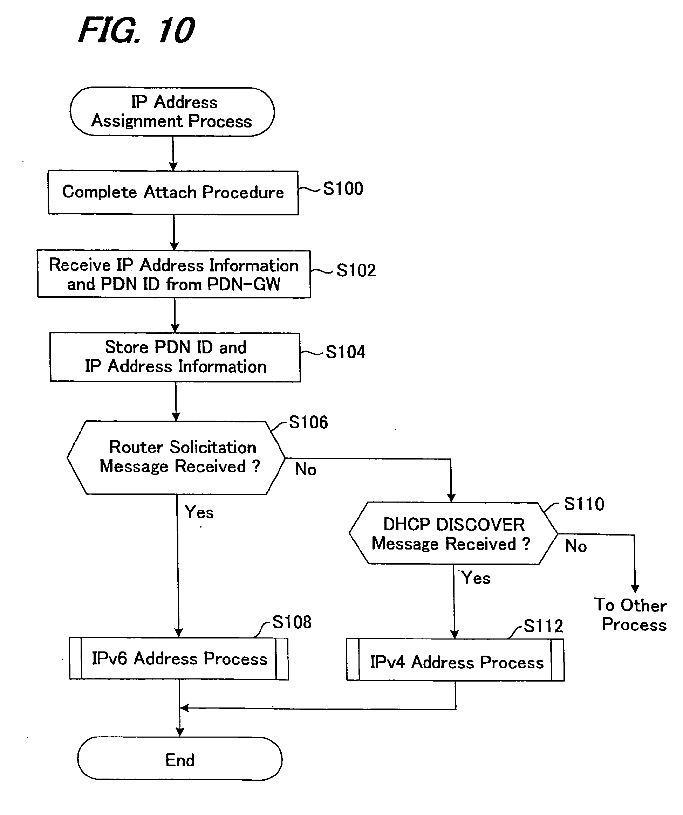

[FIG. 10] is a chart showing an operational flow of an IP address assignment process in the present embodiment.

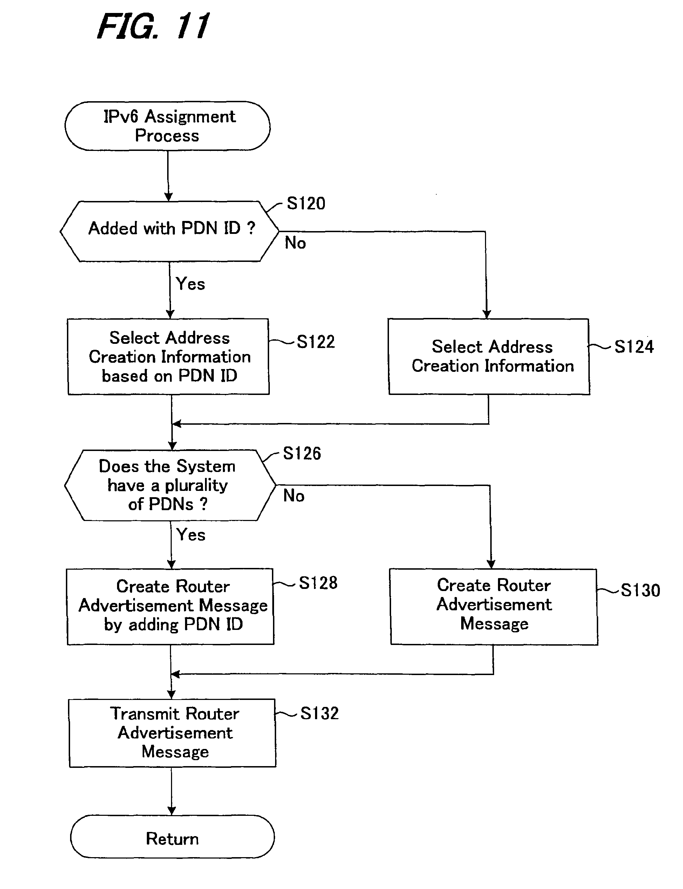

[FIG. 11] is a chart showing an operational flow of an IPv6 assignment process in the present embodiment.

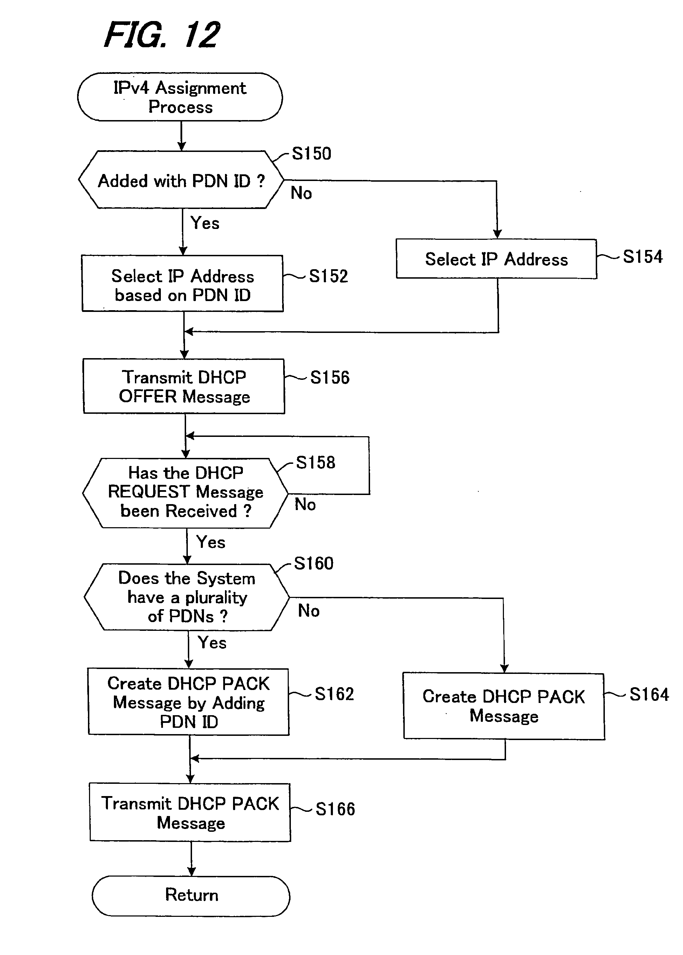

[FIG. 12] is a chart showing an operational flow of an IPv4 assignment process in the present embodiment.

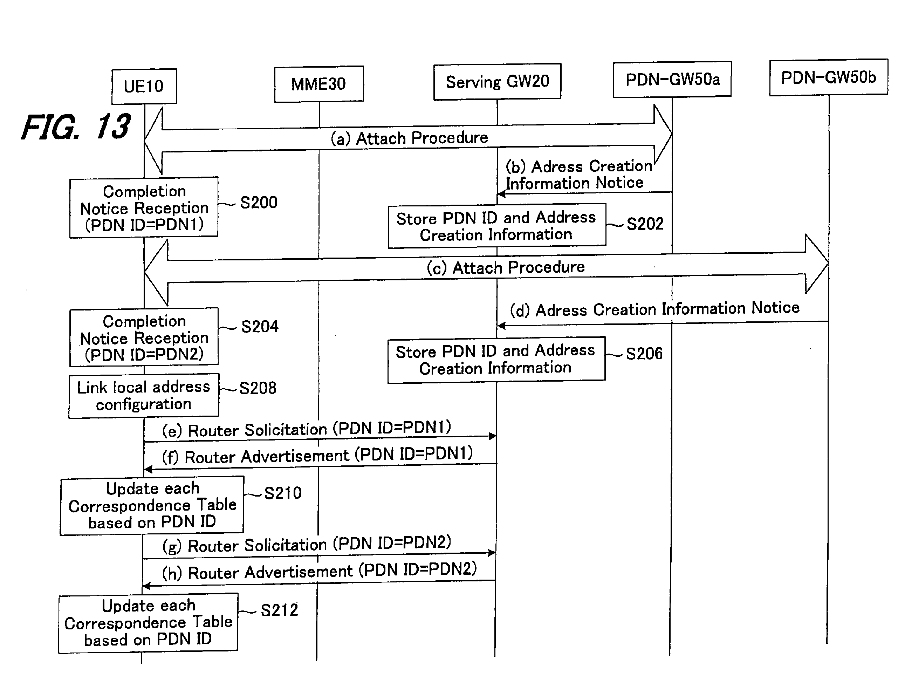

[FIG. 13] is a sequence diagram showing a mobile communications system in the first embodiment.

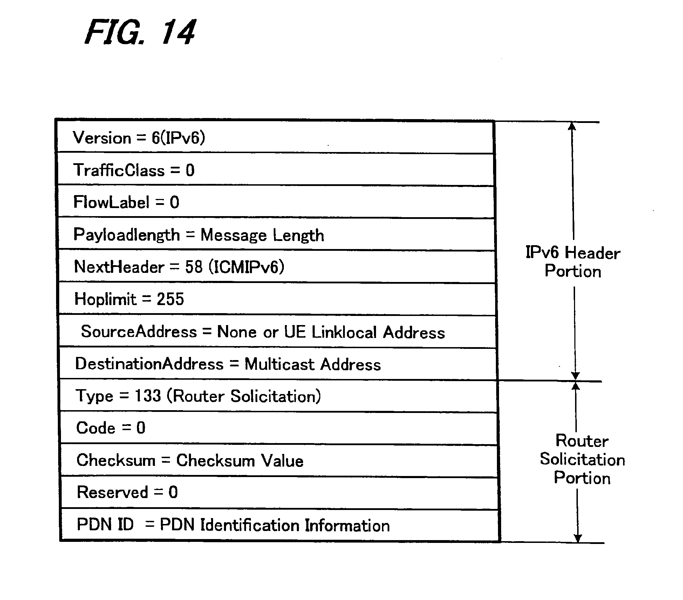

[FIG. 14] is a diagram showing one example of a packet configuration in the first embodiment.

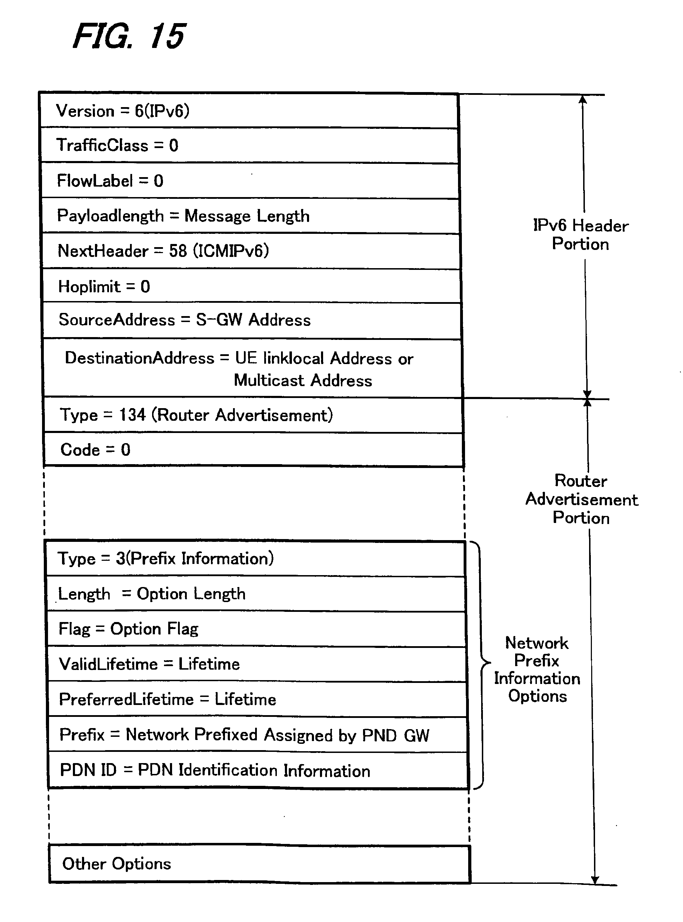

[FIG. 15] is a diagram showing one example of a packet configuration in the first embodiment.

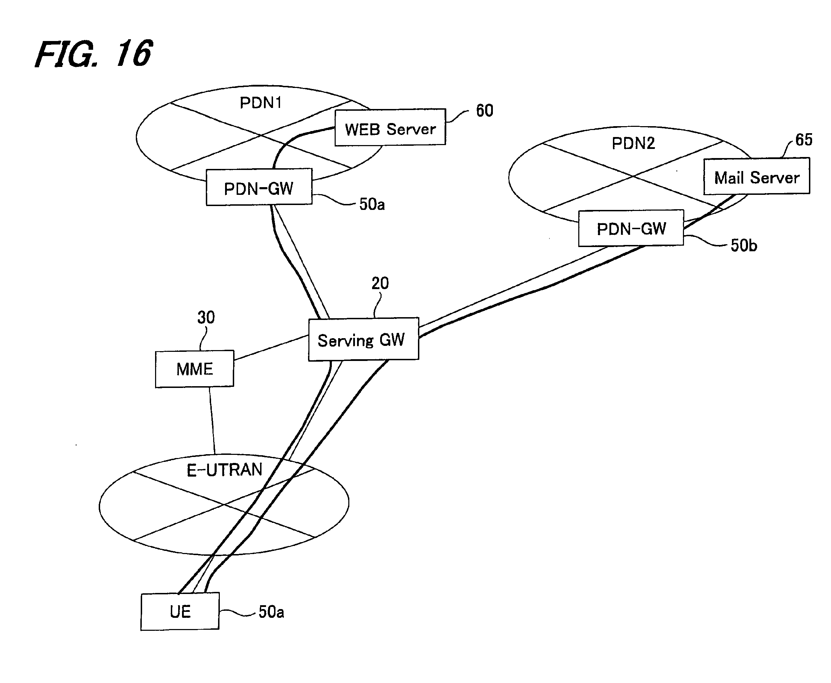

[FIG. 16] is a diagram showing an applied example of a mobile communications system in the first embodiment.

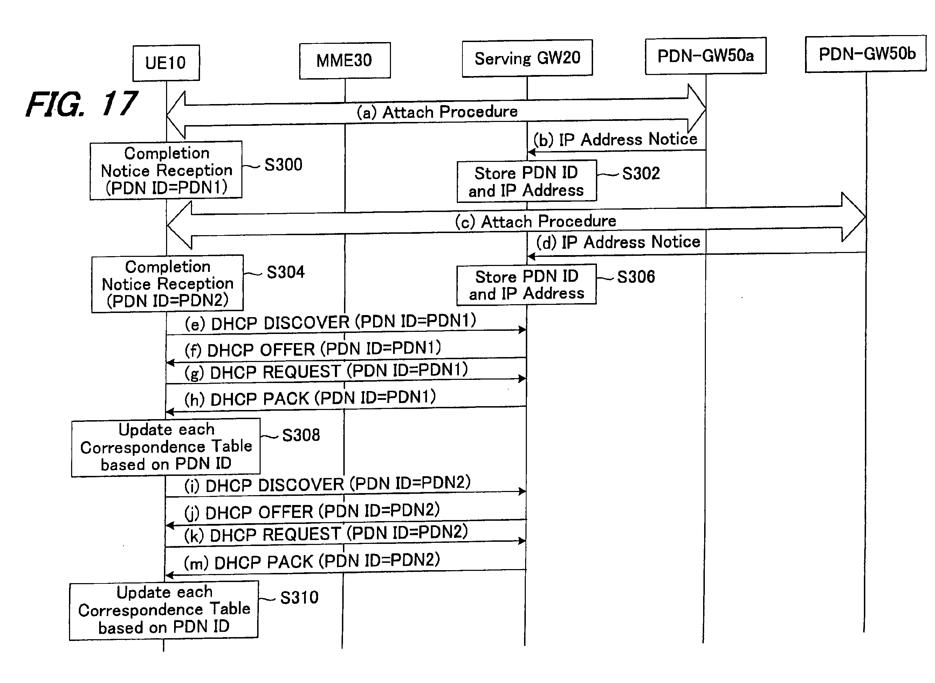

[FIG. 17] is a sequence diagram showing a mobile communications system in the second embodiment.

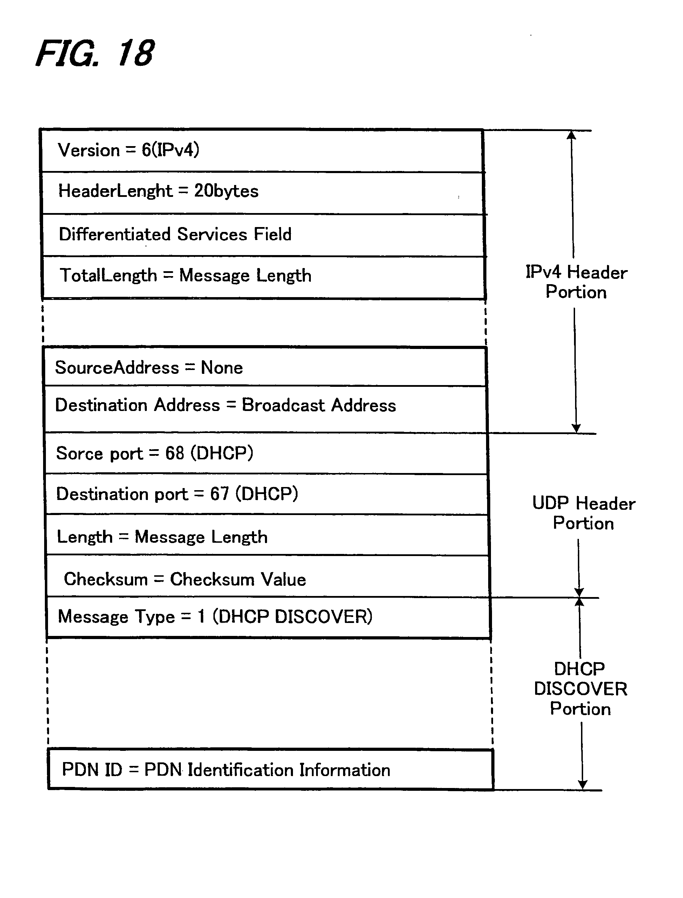

[FIG. 18] is a diagram showing one example of a packet configuration in the second embodiment.

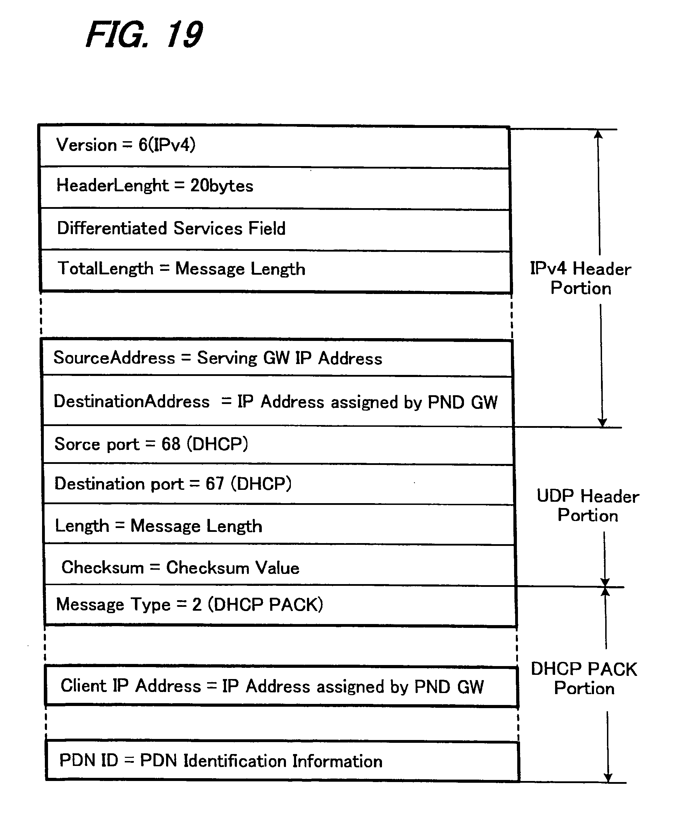

[FIG. 19] is a diagram showing one example of a packet configuration in the second embodiment.

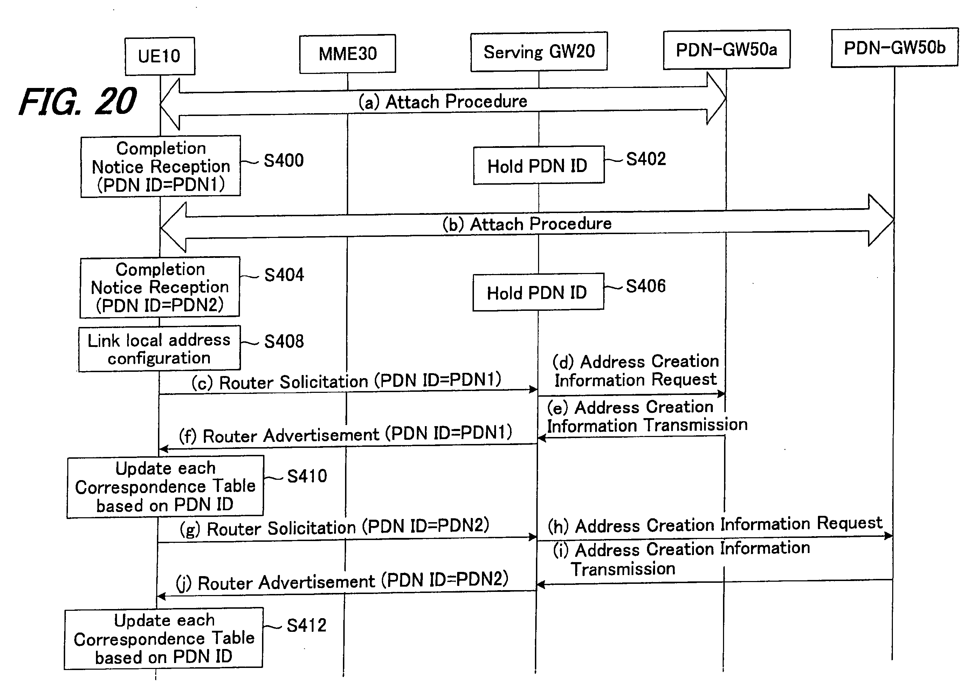

[FIG. 20] is a sequence diagram showing a mobile communications system in the third embodiment.

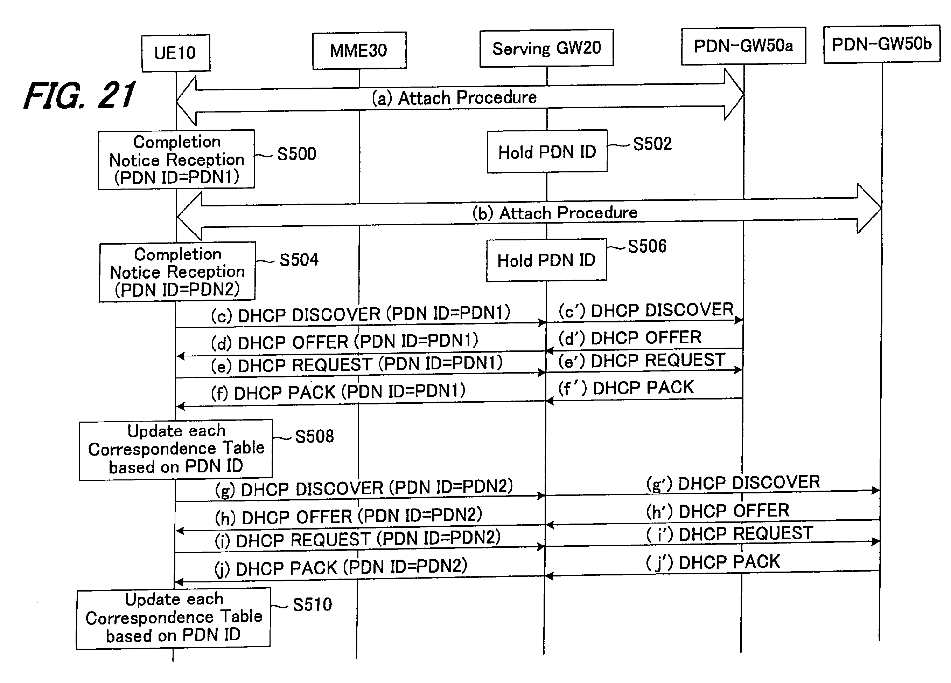

[FIG. 21] is a sequence diagram showing a mobile communications system in the fourth embodiment.

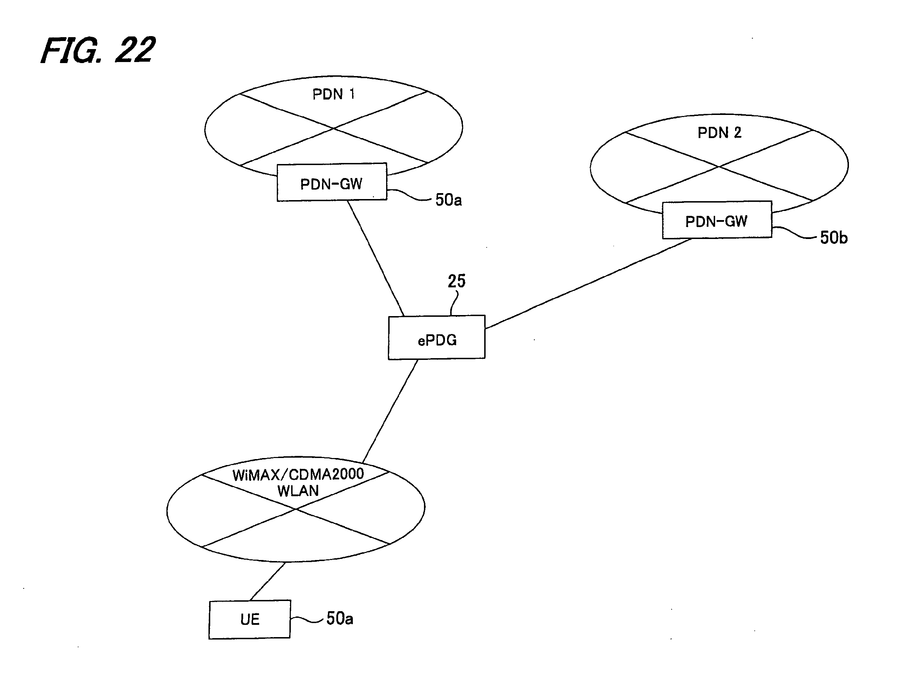

[FIG. 22] is a diagram showing an applied example of a mobile communications system of a variational example.
[FIG. 23] is a diagram for illustrating a conventional example.
[FIG. 24] is a diagram for illustrating a conventional example.
[FIG. 25] is a diagram for illustrating a conventional example.
[FIG. 26] is a diagram for illustrating a conventional example.

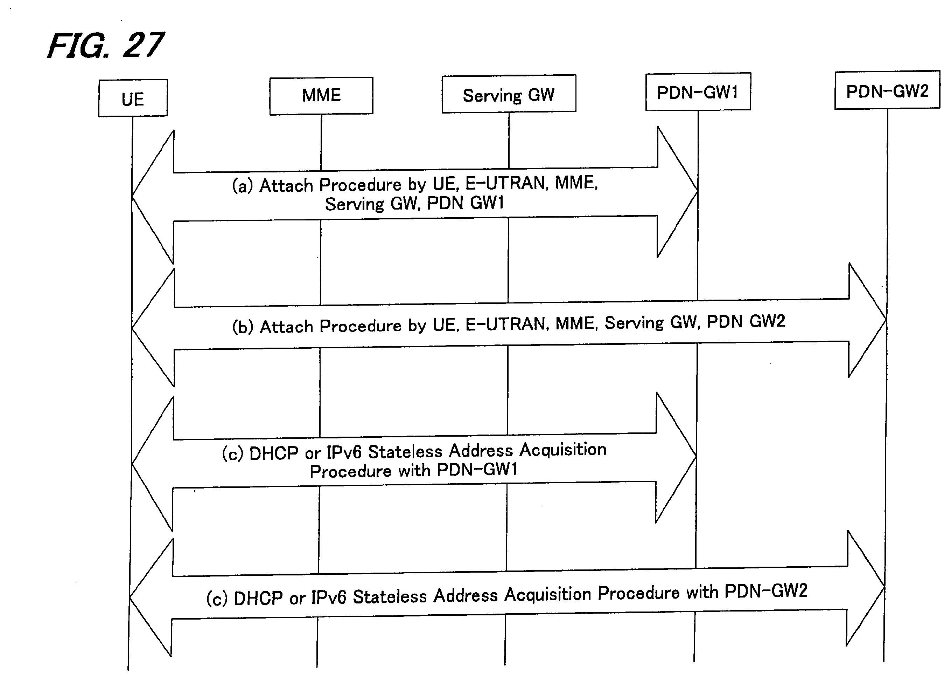

[FIG. 27] is a diagram for illustrating a conventional example.
[FIG. 28] is a diagram for illustrating a conventional example.

### Description of Reference Numerals

10 UE
   100 Controller
   102 Transceiver
   104 Data processor
   106 Attach Procedure processor
   108 IP address assignment procedure processor
   110 Storage
      1102 ASP-PDN correspondence table
      1104 PDN-IP correspondence table
      1106 ASP-IP correspondence table
      1110 Address configuration program
      1112 Data transmission and reception program
20 Serving GW
   202 First transceiver
   204 Second transceiver
   206 Data processor
   208 Attach Procedure processor
   210 IP address assignment procedure processor
   220 Storage
      2202 PDN-IP correspondence table
      2210 IP address assignment program
      2212 IPv6 assignment program
      2214 IPv4 assignment program
30 MME
50, 50a, 50b PDN-GW

### Best Mode for Carrying Out the Invention

Next, embodiments of a mobile communications system using a mobile terminal etc. in the present invention will be described with the drawings.

### [1. Configuration]

### [1.1 Network Configuration]

To begin with, the configuration of a packet communications system in the present embodiment relates to SAE (System Architecture Evolution) which is developed and standardized in 3GPP as an architecture of the mobile communications system extended from the third generation mobile communications system, and will be described by taking a particular case where the packet communications system is applied to a network connected via an E-UTRAN access system.

FIG. 1 shows the scheme of a mobile communications system (E-UTRAN) in the present embodiment. Connected to this E-UTRAN access system is a mobile terminal (UE: User Equipment) 10. An MME (Mobility Management Entity) 30 for managing the position of UE 10 and performing paging etc. is also connected.

Also, there are PDNs (Packet Data Networks) as service networks (operator networks) of network operators. A gateway device PDN-GW (Packet Data Network Gateway) is connected to the PDN. Further, the E-UTRAN access system and the PDN-GWs are connected via a Serving GW (Serving Gateway) 20 as a forwarding intermediate node.

The PDN herein is a network, and the network operator can provide a plurality of PDNs for individual services. For example, The PDN is a network that is constituted by different application service providers (ASPs). The mobile communications system of the present embodiment includes a PDN1 constructed by an ASP1 as the first operator and a PDN2 constructed by an ASP2 as the second operator.

Further, a PDN-GW is connected to each PDN. A PDN-GW 50a is connected to PDN1 and a PDN-GW 50b is connected to PDN2. Herein, when general mention is made, PDN-GW 50a and PDN-GW 50b are described as a PDN-GW 50.

Further, inside the PDN, equipment such as each server (e.g., a WEB server or mail server) etc., is installed. UE 10 becomes able to receive each service by establishing communications with each server installed inside the PDN.

That is, in the mobile communications system in the present embodiment, as the channels between UE10 and the server inside the PDN, there exists two channels, the communication route established by way of PDN-GW 50, Serving GW 20 and the E-UTRAN access system and the communication route established by way of PDN-GW 50, Serving GW 20, MME 30 and the E-UTRAN access system.

### [1.2 Apparatus Configuration]

Next, of the equipment arranged in the mobile communications system, the configurations of UE10 and Serving GW 20 will be described with reference to the drawings.

### [1.2.1 Configuration of UE 10]

First, the configuration of UE10 will be described with the drawings. FIG. 2 is a block diagram for illustrating the configuration of UE10. As shown in FIG. 2, UE10 includes a controller 100, a transceiver 102, a data processor 104, an Attach Procedure Processor 106, an IP address assignment procedure processor 108 and a storage 110.

Controller 100 is a functional portion that executes each process in UE10 and controls the operation of UE10. Controller 100 reads out and executes various programs stored in storage 110 so as to realize various processes. The controller also controls each functional portion. Controller 100 is configured of, for example a CPU (Central Process Unit) etc.

Transceiver 102 is a functional portion that is connected to an external antenna so as to access a radio access system (E-UTRAN access system) via the external antenna to transmit and receive data. The transceiver converts data input from each functional portion into a form that is suitable for the connected communications system to transmit data. The transceiver also outputs the data received through the external antenna to each functional portion.

Data processor 104 is a functional portion that processes services and application data to perform communications via transceiver 102.

Attach Procedure processor 106 is a functional portion that executes the processing of control information for an Attach Procedure to perform transmission and reception via transceiver 102. UE10, using Attach Procedure processor 106, executes an Attach Procedure with each network and apparatus.

IP address assignment procedure processor 108 is a functional portion that processes control information for DHCP and IPv6 stateless address configuration. IP address assignment procedure processor 108, based on the data received by transceiver 102, acquires or creates an IP address of UE10. Here, the IP address used in the present embodiment is an IPv6 or IPv4 address.

Storage 110 is a functional portion that holds programs and information acquired by the processors, applications and the like. Storage 110 has an ASP-PDN correspondence table 1102, a PDN-IP correspondence table 1104 and ASP-IP correspondence table 1106 stored therein and also an address configuration program 1110 and data transmission and reception program 1112 stored therein.

ASP-PDN correspondence table 1102 is a table that stores a service provider and the ID of the PDN used as a network identifier in an associated manner. FIG. 3 shows one example of a data configuration of ASP-PDN correspondence table 1102. As shown in FIG. 3, a service provider (e.g., "ASP1") is made correspondent to the ID of the PDN that is constructed by the service provider (e.g., "PDN1", hereinbelow, the ID of a PDN will be referred to as "PDN ID") and stored.

PDN-IP correspondence table 1104 is a table that stores a PDN ID and the IP address assigned by the PDN in an associated manner. FIG. 4 shows one exemplary data configuration of PDN-IP correspondence table 1104. As shown in FIG. 4, a PDN ID (e.g., "PDN1") is made correspondent to an IP address (e.g., "IP address 1(PDN1)") and stored.

ASP-IP correspondence table 1106 is a table that stores a service provider and an IP address assigned in the PDN that is constructed by the service provider, in an associatedmanner. FIG. 5 shows one example of a data configuration of ASP-IP correspondence table 1106. As shown in FIG. 5, a service provider (e.g., "ASP1") and an IP address (e.g., "IP address 1(PDN1)") are associated and stored.

Address configuration program 1110 is a program that executes a process of assigning an IP address to UE10, based on the data received from Serving GW 20. Controller 100 reads out and executes address configuration program 1110 to thereby realize an address configuration process (FIG. 8).

Data transmission and reception program 1112 is a program for realizing a process for UE10 to establish communications with each server etc. Controller 100 reads out and executes data transmission and reception program 1112 to thereby realize a data transmission and reception process (FIG. 9).

### [1.2.2 Configuration of Serving GW 20]

Next, the configuration of Serving GW 20 will be described with reference to the drawings. FIG. 6 is a block diagram for illustrating the configuration of Serving GW 20. As shown in FIG. 6, Serving GW 20 includes a controller 200, a first transceiver 202, a second transceiver 204, a data processor 206, an Attach Procedure processor 208, an IP address assignment procedure processor 210 and a storage 202.

Controller 200 is a functional portion that executes each process in GW 20 and controls the operation of Serving GW20. Controller 200 is configured of, for example a CPU (Central Process Unit) etc.

First transceiver 202 is a functional portion that performs communications with the radio access system (E-UTRAN access system). Second transceiver 204 is a functional portion that performs communications with PDN-GW 50.

Data processor 206 is a processor that processes data for relaying the transmitted and received data between UE 10 and each server and equipment arranged in the PDNs to achieve communications. First transceiver 202 is used for communications with UE 10, whereas second transceiver 204 is used for communications with PDN-GW 50 (to perform communications with each server and equipment arranged in the PDNs by way of PDN-GW50).

Attach Procedure processor 208 is a functional portion that executes the processing of control information for Attach procedures to perform transmission and reception via first transceiver 202 or second transceiver 204. An Attach Procedure is executed between the associated apparatuses.

IP address assignment procedure processor 210 is a functional portion that processes control information for DHCP and IPv6 stateless address configuration. IP address assignment procedure processor 210 is a functional portion that assigns the IP addresses assigned by different PDNs to UE10 and creates information (address creating information) for creating an IP address and transmits the information to UE 10.

Storage 212 is a functional portion that holds information acquired by the processors, applications and the like. Here, storage 220 has a PDN-IP information correspondence table 2202 stored therein and also has an IP address assignment program 2210, an IPv6 assignment program 2212 and an IPv4 assignment program 2214 stored therein.

PDN-IP information correspondence table 2202 is a table that stores the ID of a PDN and IP address information on the IP address assigned in the PDN in an associated manner. Here, the IP address information is information that is needed when UE 10 assigns an IP address. When the mobile communications system is an IPv4 system, this information is an IP address. When the system is an IPv6 system, the information is address creating information for creating an IP address in UE 10.

FIG. 7 shows one exemplarydata configuration of PDN-IP information correspondence table 2202. As shown in FIG. 7, a PDN ID (e.g., "PDN1") and IP address information (e.g., IPv6 address creation information assigned by PDN1/IPv4 address) are associated and stored.

IP address assignment program 2210 is a program that assigns an IP address to UE 10 based on the IP address information or transmits address creation information. Controller 200 reads out and executes address configuration program 2210 to thereby realize an address configuration process (FIG. 10).

IPv6 assignment program 2212 is a program that is executed when the mobile communications system is based on IPv6. Controller 200 reads out and executes IPv6 assignment program 2212 to thereby realize an IPv6 assignment process (FIG. 11).

IPv4 assignment program 2214 is a program that is executed when the mobile communications system is based on IPv4. Controller 200 reads out and executes IPv4 assignment program 2214 to thereby realize an IPv4 assignment process (FIG. 12).

### [2. Description of Operation]

Subsequently, individual operating processes in UE 10 and Serving GW 20 will be described with reference to the drawings.

### [2.1 Address Configuration Process]

First, the address configuration process executed in UE10 will be described based on FIG. 8.

First, when UE 10 is activated or tires to connect to an ASP, the UE executes an Attach Procedure for every ASP and completes the procedure (Step S10). At this point, UE 10 determines from the executed Attach Procedure whether a PDN ID can be acquired (Step S12).

At this point, when it is determined that a PDN ID can be obtained (Step S12; Yes), the UE acquires the PDN ID and stores the PDN ID in association with the ASP for which an Attach Procedure was executed by UE 10, or the ASP that constitutes the PDN, into ASP-PDN correspondence table 1102 (Step S14).

Though the present embodiment is described by presuming that the received PDN ID is stored in association with the ASP into ASP-IP correspondence table 1106, there may be a case where no PDN ID is acquired when the PDN is constituted solo in the mobile communications system.

Subsequently, UE 10 determines whether the IP address to be acquired is an IPv6 address (Step S16) or not. Here, various ways can be considered as the method of determining whether the IP address to be acquired is an IPv6 address or not. For example, a determination may be made for each ASP to be connected or for each application to be used.

Then, when the IP address to be acquired is an IPv6 address (Step S16; Yes), a "Router Solicitation message" is transmitted in order to request address creation information (Step S18). It is assumed herein that the "Router Solicitation message" is transmitted with the PDN ID. Needless to say, the PDN ID does not need to be added if unnecessary.

Subsequently, UE 10 receives a "Router Advertisement message" from Serving GW 20 as a reply to the "Router Solicitation message" (Step S20). There is a case where "Router Advertisement message" is transmitted from GW 20 on its initiative, hence it is not always necessary for UE 10 to transmit a "Router Solicitation message".

Then, UE 10 creates an IP address of UE 10 based on the address creation information written in the "Router Advertisement message" (Step S22).

On the other hand, at Step S16, when the IP address to be acquired is determined to be an IPv4 address (Step S16; No), a "DHCP DISCOVER message" is transmitted (Step S24). It is assumed herein that the "DHCP DISCOVER message" is transmitted with the PDN ID. Thereafter, messages are transmitted and received in accordance with the procedure defined by the DHCP to thereby receive an IP address.

Specifically, after sending a "DHCP DISCOVER message" from IP address assignment procedure processor 108 (Step S24), the UE receives a "DHCP OFFER message" through transceiver 102 (Step S26). Then, UE 10 transmits a "DHCP REQUEST message" (Step S28) and receives a "DHCP PACK message" through transceiver 102 (Step S30). Then, IP address assignment procedure processor 108 receives the IP address in UE 10 from the "DHCP PACK message".

Then, UE 10 determines whether an PDN ID is added to the data received from Serving GW 20 (for example, the "Router Advertisement message" received at Step S20 and the "DHCP PACK message" received at Step S30) or not.

If the data has an PDN ID added (Step S32; Yes), the PDN ID and the IP address assigned by the PDN ID are stored in PDN-IP correspondence table 1104, in an associated manner (Step S34). Here, the IP address to be stored is the IP address of IPv6 created at Step S22 or the IP address of IPv4 received at Step S30.

Further, the IP address currently received is associated with the ASP assigned with the IP address, and stored into ASP-IP correspondence table 1106 (Step S36). At this point, if no PDN ID is included (Step S32; No), "PDN ID" is set at null and the IP address alone is stored in PDN-IP correspondence table 1104.
As to the IP address that is stored with its PDN ID set at null, if no PDN ID corresponding to the destination ASP has been stored at the time when UE 10 transmits data, the IP address with its PDN ID set at null is selected as the sender IP address.

### [2.2 Data Transmission and Reception Process]

Next, data transmission and reception process will be described using FIG. 9. First, when detecting data transmission and reception with an ASP (Step S50; Yes), UE 10 selects the IP address corresponding to the ASP from ASP-IP correspondence table 1106 (Step S52).

For example, when an ASP is determined in order to use the application service etc. selected at present, the IP address corresponding to the ASP is read out from ASP-IP correspondence table 1106 to set as the address of UE 10. Then, communication is performed using the selected IP address as the sender address (Step S54).

Here, in this case, when there is no data on correspondence between ASP and IP address, the mobile communications system is determined as being constructed of a single PDN, and the IP address held at present by UE 10 is used to perform communications.

In the case of a mobile communications system made up of a single PDN, for example UE 10 may have only one IP address, or for example the service provider is set with "null" in ASP-IP correspondence table 1106 and the IP address with its service provider set with null may be used as the default IP address to perform communications. This mobile communications system made up of a single PDN is the same as that of the conventional example, so that detailed description is omitted.

### [2.3 IP Address Assignment Process]

Referring next to FIG. 10, the IP address assignment process executed by Serving GW 20 will be described.

First, when having completed the process of an Attach Procedure (Step S100), Serving GW20 receives the IP address information for UE10 and a PDN ID from PDN-GW 50 (Step S102). Here, Serving GW 20 stores the IP address information and the PDN ID into PDN-IP information correspondence table 2202 (Step S104).

Then, Serving GW 20 determines whether the data received from first transceiver 202 is a "Router Solicitation message" or not (Step S106). Here, when the received message is a "Router Solicitation message" (Step S106; Yes), an IPv6 assignment process is executed (S108).

When the received message is a "DHCP DISCOVER message" (Step S106; No -> Step S110; Yes), an IPv4 assignment process is executed (Step S112).

Here, if the received message is neither "Router Solicitation message" nor "DHCP DISCOVER message", another process is executed (Step S106; No -> Step S110; No). It is also possible to execute a repeated process from Step S106.

### [2.4 IPv6 Assignment Process]

Referring next to FIG. 11, an IPv6 assignment process executed by Serving GW 20 will be described. The IPv6 assignment process is a process that is executed at Step S108 of the IP address assignment process described already with reference to FIG. 10.

First, it is determined whether a PDN ID is added to the received "Router Solicitation message" or not (Step S120). Here, if a PDN ID is added (Step S120; Yes), address creation information with the PDN ID is selected from PDN-IP information correspondence table 2202 (Step S122).

That is, address creation information corresponding to the PDN ID included in the "Router Solicitation message" received from UE 10 is searched from PDN-IP information correspondence table 2202. Then, the searched address creation information corresponding to the PDN ID is selected.

Here, if no PDN ID has been added (Step S120; No), Serving GW20 selects the held address creation information as the address creation information corresponding to UE 10.

The mobile communications system is formed of a single PDN when no PDN ID has been added, hence Serving GW 20 holds only a piece of information as the address creation information for UE 10.

Subsequently, it is determined whether the mobile communications system has a system architecture formed of a plurality of PDNs (Step S126). Here, when the system architecture is determined to be formed of a plurality of PDNs (Step S126; Yes), a "Router Advertisement message" to be transmitted to UE 10 is created with a PDN ID (Step S128). On the other hand, when the mobile communications system is constructed of a single PDN, a "Router Advertisement message" without any PDN ID added is created (Step S130).

Then, Serving GW 20 transmits the "Router Advertisement message" created at Step S128 or Step S130 to UE10.

### [2.5 IPv4 Assignment Process]

Referring next to FIG. 12, an IPv4 assignment process executed by Serving GW 20 will be described. An IPv4 assignment process is the process that is executed at Step S112 of the IP address assignment process described with reference to FIG. 12.

First, Serving GW 20 determines whether a PDN ID is added to the received "DHCP DISCOVER message" or not (Step S150).

Here, if a PDN ID is added (Step S150; Yes), an ID address is selected based on the PDN ID (Step S152).

That is, an IP address corresponding to the PDN ID included in the "DHCP DISCOVER message" received from UE 10 is searched from PDN-IP information correspondence table 2202. Then, the searched IP address corresponding to the PDN ID is selected.

Here, if no PDN ID has been added (Step S150; No), Serving GW 20 selects the held IP address as the address for UE 10.

The mobile communications system is formed of a single PDN when no PDN ID has been added, hence Serving GW 20 holds only one address as the address for UE10.

Subsequently, Serving GW 20 transmits a "DHCP OFFER message" to UE 10 (Step S156). When a "DHCP REQUEST message" is received from UE 10 after transmission (Step S158; Yes), it is determined whether the mobile communications system has a system architecture formed of a plurality of PDNs (Step S160).

Here, when the system architecture is determined to be formed of a plurality of PDNs (Step S160; Yes), a "DHCP PACK message" with a PND ID added is created (Step S162). On the other hand, when the mobile communications system is constructed of a single PDN, a "DHCP PACK message" without any PDN ID added is created (Step S164).

Then, Serving GW 20 transmits the "DHCP PACK message" created at Step S162 or Step S164 to UE 10.

### [3. Embodiments]

Subsequently, embodiments of the above-described mobile communications system will be specifically described using sequence diagrams.

### [3.1 The First Embodiment]

First, a mobile communications system using IPv6 will be described as the first embodiment with reference to FIG. 13.

First, UE 10 executes an Attach Procedure process for every ASP. In this case, the process is individually executed between UE 10 and PDN-GW 50a for PDN1 (FIG. 13(a)) and between UE 10 and PDN-GW 50b for PDN2 (FIG. 13(c)).

Different from the conventional ways, the completion notice of the Attach Procedure includes a PDN ID for identifying the PDN. For example, when a completion notice of the Attach Procedure with PDN1 is received (Step S200), "PDN1" is received as the PDN ID. When a completion notice of the Attach Procedure with PDN2 is received (Step S204), "PDN2" is received as the PDN ID.

Further, PDN-GW 50 gives notice of the necessary address creation information for creating the IP address of UE10 to Serving GW 20.

The notice as to PDN1 is given from PDN-GW 50a to Serving GW 20 (FIG. 13(b)) while the notice as to PDN2 is given from PDN-GW 50b to Serving GW 20 (FIG. 13(d))

Further, UE 10 stores the received PDN ID in association with the ASP into ASP-PDN correspondence table 1102. Here, as the PDN ID, the IP address of the PDN GW or the FQDN (Fully Qualified Domain Name) as a hostname may also be used. Or a sequence of digits that is unique within the system to permit the network operator to identify the PDN may be used.

Further, Serving GW 20 stores the received address creation information as IP address information in association with the PDN ID into PDN-IP information correspondence table 2202.

In FIG. 13, first, the address creation information notified from PDN-GW 50a and the PDN ID (PDN1) are stored (Step S202). Then, the address creation information notified from PDN-GW 50b is stored in association with the PDN ID into PDN-IP information correspondence table 2202 (Step S206).

Here, when the address of PDN-GW 50 is not used as the PDN ID, Serving GW 20 may previously hold the address of PDN-GW50 and PDN ID so as to solve the PDN ID from the sender address of the address-creation-information-notifying-message and thereby let the PDN ID correspond to the notified information.

Then, UE10 creates a Link local address in the same way as the conventional IPv6 procedure (Step S208).

Subsequently, in order to request address creation information, UE 10 transmits a "Router Solicitation message" to Serving GW 20 (FIG. 13(e)). At this time, differing from the conventional ways, the "Router Solicitation message" is transmitted by adding the ID of the destination PDN, or the PDN from which the UE requests address creation information.

Serving GW 20 sends a "Router Advertisement message" as a reply to the received "Router Solicitation message" (FIG. 13(f)). At this time, when a PDN ID is added to the received "Router Solicitation message", the "Router Advertisement message" correspondent to the PDN ID is transmitted in reply.

Here, differing from the conventional ways, the "Router Advertisement message" is notified with the PDN ID (PDN1) corresponding to address creation information. In this connection, FIG. 14 shows one example of a "Router Solicitationmessage" and FIG. 15 shows one example of a "Router Advertisement message". In this way, the messages are given in the form of the conventional messages added with a PDN ID.

When receiving the "Router Advertisement message", UE 10 updates each correspondence table, based on the PDN ID (PDN1) included in the received "Router Advertisement message" (Step S210). Specifically, first, an IP address is created from the "Router Advertisement message". Then, the PDN ID (PDN1) is stored in association with the IP address created from the address creation information transmitted from PDN1, into PDN-IP correspondence table 1104.

Also, the ASP (ASP1) corresponding to the PDN ID is stored in association with the IP address into ASP-IP correspondence table 1106. As a result, PDN-IP correspondence table 1104 and ASP-IP correspondence table 1106 are updated based on the received PDN ID.

Similarly, in order to request address creation information from ASP2 (PDN2), UE 10 transmits a "Router Solicitation message" including the PDN ID of the PDN to be requested, to Serving GW 20 (FIG. 13(g)). Serving GW 20 sends a "Router Advertisement message", corresponding to the PD ID included in the received "Router Solicitation message", as a reply (FIG. 13(h)).

The "Router Advertisement message" of FIG. 13(h) includes "PDN2" as a PDN ID.

When receiving the "Router Advertisement message", UE10 updates each correspondence table based on the PDN ID (PDN2) included in the received "Router Advertisement message" (Step S212). Specifically, first, an IP address is created from the "Router Advertisement message". Then, the PDN ID (PDN2) is stored in association with the IP address into PDN-IP correspondence table 1104.

Also, the ASP (ASP2) corresponding to the PDN ID is stored in association with the IP address into ASP-IP correspondence table 1106. As a result, PDN-IP correspondence table 1104 and ASP-IP correspondence table 1106 are updated based on the received PDN ID.

Conventionally, when solo Serving GW 20 transmits a "Router Advertisement message" after Attach Procedure processes with a plurality of PDN-GWs for ASPs (PDNs) have been completed, it was impossible for UE 10 to determine which PDN the received data was assigned from.

However, in the present embodiment, a PDN ID is added when communication is made between UE 10 and Serving GW 20, whereby it becomes possible to establish appropriate communication even when the UE is connected to a plurality of ASPs (PDNs) via solo Serving GW 20.

For example, FIG. 16 is a diagram showing the scheme of a mobile communications system in the present embodiment. A WEB server 60 is connected to PDN1 and a mail server 65 is connected to PDN2. In this case, when UE10 connects to PDN1, the UE can establish communication using the IP address assigned from PDN-GW 50a disposed on PDN1. When UE 10 connects to PDN2, the UE can establish communication using the IP address assigned from PDN-GW 50b disposed on PDN2.

Accordingly, the network operator can provide a separate PDN for each of services (applications) such as a WEB service, mail service and the like, hence distributes loads of communications from Serving GW 20.

Though in the present embodiment, the ASP is managed in association with the PDN, management may be made in association with, for example every service, instead of ASP. That is, in the UE, a service for each PDN such as a WEB service, mail service or the like provided by a network operator is managed in association with the PDN, whereby the UE can establish communications by selecting an IP address in accordance with the service.

Alternatively, management may be made in association with every application, instead of ASP. That is, the UE includes a plurality of applications for receiving services provided by a network operator, and manages each application in association with the PDN, whereby the UE can establish communications by selecting an IP address in accordance with the application used.

Further, the above embodiment was described on the assumption that UE 10 transmits a "Router Solicitation message" to request a "Router Advertisement message". However, it is possible to provide such a configuration that a "Router Advertisement message" is sent from Serving GW 20 to UE 10 at a predetermined timing.

Moreover, the above embodiment was described taking an example in which a PDN ID is added to a "Router Solicitation message" to establish communications. However, a "Router Solicitation message" without PDN ID added as before may also be used. Also, as to the "Router Advertisement message", a conventional "Router Advertisement message" without PDN ID added may be used. When a PDN ID is added to a "Router Advertisement message", UE 10 determines that the architecture is formed of a solo PDN, and performs all communications using a created IP address. As a result, UE 10 and Serving GW 20 can operate so as to support both the architecture of a single PDN and the architecture of plural PDNs.

### [3.2 The Second Embodiment]

Next, a mobile communications system using IPv4 will be described as the second embodiment with reference to FIG. 17.

First, UE 10 executes an Attach Procedure process for every ASP. In this case, the process is individually executed between UE 10 and PDN-GW 50a for PDN1 (FIG. 17(a)) and between UE 10 and PDN-GW 50b for PDN2 (FIG. 17(c)).

Different from the conventional ways, the completion notice of the Attach Procedure includes a PDN ID for identifying the PDN. For example, when a completion notice of the Attach Procedure with PDN1 is received (Step S300), "PDN1" is received as the PDN ID. When a completion notice of the Attach Procedure with PDN2 is received (Step S304), "PDN2" is received as the PDN ID.

Further, PDN-GW 50 assigns an IP address to UE 10 and gives notice of the assigned IP address to Serving GW 20.

As to PDN1, an IP address is notified from PDN-GW 50a to Serving GW 20 (FIG. 17(b)) while an IP address as to PDN2 is notified from PDN-GW50b to Serving GW 20 (FIG. 17(d))

Further, UE10 stores the received PDN ID in association with the ASP into ASP-PDN correspondence table 1102. Here, as the PDN ID, the IP address of the PDN GW or the FQDN (Fully Qualified Domain Name) as a hostname may also be used. Or as the PDN ID, a sequence of digits that is unique within the system to permit the network operator to identify the PDN may be used.

Further, Serving GW 20 stores the received IP address in association with the PDN ID into PDN-IP information correspondence table 2202. In FIG. 13, the IP address notified from PDN-GW 50a and the PDN ID (PDN1) are stored (Step S302). Then, the IP address notified from PDN-GW 50b and PDN ID (PDN2) are stored (Step S306).

Here, when the address of PDN-GW 50 is not used as the PDN ID, Serving GW 20 may previously hold the address of PDN-GW50 and PDN ID so as to solve the PDN ID from the sender address of the address-creation-information-notifying-message and thereby let the PDN ID correspond to the notified information.

Subsequently, UE 10 executes the procedures for acquiring IP addresses. In this case, first, in order to acquire the IP address of ASP1(PDN1), the UE adds PDN ID to a "DHCP DISCOVER message" and transmits it to Serving GW 20 (FIG. 17(e)). Then, Serving GW 20 transmits a "DHCP OFFER message" to UE 10 (FIG. 17(f)).

Further, when UE 10 transmits a "DHCP REQUEST message" to Serving GW 20 (FIG. 17(g)), Serving GW 20 transmits a "DHCP PACK message" as a reply to UE 10 (FIG. 17(h)).

Here, FIGS. 18 and 19 show packet format examples. FIG. 18 is one example of a "DHCP DISCOVER message" added with a PDN ID. FIG. 19 is one example of a "DHCP PACK message" added with a PDN ID.

When receiving the "DHCP PACK message", UE 10 updates each correspondence table, based on the PDN ID (PDN1) included in the received "DHCP PACK message" (Step S308). Specifically, the PDN ID (PDN1) is stored in association with the IP address notified by the "DHCP PACK message", into PDN-IP correspondence table 1104.

Also, the ASP (ASP1) corresponding to the PDN ID is stored in association with the IP address into ASP-IP correspondence table 1106. As a result, PDN-IP correspondence table 1104 and ASP-IP correspondence table 1106 are updated based on the received PDN ID.

Subsequently, in order to acquire the IP address of ASP2 (PDN2), UE 10 adds PDN ID (PDN2) to a "DHCP DISCOVER message" and transmits it to Serving GW 20 (FIG. 17(i)). Then, Serving GW 20 transmits a "DHCP OFFER message" to UE 10 (FIG. 17(j)).

Further, when UE 10 transmits a "DHCP REQUEST message" to Serving GW 20 (FIG. 17(k)), Serving GW 20 transmits a "DHCP PACK message" as a reply to UE 10 (FIG. 17(m)).

When receiving the "DHCP PACK message", UE 10 updates each correspondence table, based on the PDN ID (PDN2) included in the received "DHCP PACK message" (Step S310). Specifically, the PDN ID (PDN2) is stored in association with the IP address notified by the "DHCP PACK message", into PDN-IP correspondence table 1104.

Also, the ASP (ASP2) corresponding to the PDN ID is stored in association with the IP address into ASP-IP correspondence table 1106. As a result, PDN-IP correspondence table 1104 and ASP-IP correspondence table 1106 are updated based on the received PDN ID.

Herein, the difference from the IPv6 acquisition procedure described in the first embodiment is that the method in which UE 10 acquires IP addresses is implemented in accordance with the DHCP procedure. In the case of acquiring an IPv6 address, UE 10 receives a "Router Advertisement message" and creates an address in accordance with the procedure of IPv6 stateless address configuration. In contrast, in the case of acquiring an IPv4 address, the address is assigned by the DHCP. Here, among the IP addresses given notice from a plurality of PDNs, it is possible to select the IPv4 address corresponding to the PDN that UE 10 requests for communication with.

As a result, even when the UE is connected to a plurality of PDNs, it is possible to hold IPv4 addresses corresponding to different PDNs. With this, similarly to the embodiment of the IPv6 address procedure, conventionally, when single Serving GW 20 assigns an IP address by the DHCP procedure after DHCP procedures with a plurality of PDN-GWs 50 have been completed, it was impossible for UE 10 to determine which PDN the received address was assigned from. However, according to the present embodiment, the assigned IP address is managed with the associated PDN, so that it is possible to perform correct communication.

### [3.3 The Third Embodiment]

Next, the third embodiment will be described. The third embodiment is a variational example of the IPv6 address acquisition procedure described in the first embodiment and will be described with reference to FIG. 20. In the present embodiment, initiated by a request for address creation information that is made by a "Router Solicitation message" transmitted from UE 10, Serving GW 20 makes inquiry about an address to PDN-GW 50 and notifies to UE 10 the address creation information that is obtained from PDN-GW 50 and will be needed for address creation by UE 10.

As shown in FIG. 20, first, an Attach Procedure is executed for every ASP as has been conventionally done (FIG. 20(a)). The difference from the conventional ways is that a PDN ID is added to the completion notice of the Attach Procedure to be transmitted to UE 10 for identifying a PDN. Accordingly, when UE 10 receives the completion notice of the Attach Procedure, the UE is given notice of the PDN ID (PDN1) (Step S400). Then, UE10 stores the correspondence between the PDN ID and the ASP.

At this point, Serving GW 20 holds the PDN ID in the Attach Procedure (Step S402).

Similarly, UE 10 performs the same procedure for PDN2. That is, when UE 10 receives a completion notice of the Attach Procedure as to PDN2, the UE is given notice of the PDN ID (PDN2) (Step S404). Then, UE 10 stores the correspondence between the PDN ID and the ASP.

At this point, Serving GW 20 holds the PDN ID (S406), thanks to the Attach Procedure.

Similarly to the conventional ways, UE 10 creates a Link-local address after completion of the Attach Procedure (Step S408).

Then, UE 10 transmits a "Router Solicitation message" to Serving GW 20 to request a "Router Advertisement message" (FIG. 20(c)). First, UE 10 makes a request for a "Router Advertisement message" to PDN1.

Here, differing from the conventional ways, by adding the PDN ID to the "Router Solicitation message", an address creation information is requested by designating the PDN. Serving GW 20 receives the "Router Solicitation message" and makes a request for address creation information to PDN-GW 50a, whose held PDN ID coincides with the PDN ID (PDN1) in the message (FIG. 20(d)).

PDN-GW 50a gives notice of the address creation information to be needed for address creation by UE 10, to Serving GW 20 (FIG. 20(e)). Serving GW 20 gives notice of the received address creation information to UE 10 through a "Router Advertisement message" (FIG. 20(f)). Here, differing from the conventional ways, a PDN ID is added to the "Router Advertisement message", which is then transmitted.

When receiving the "Router Advertisement message", UE 10 updates each correspondence table, based on the PDN ID (PDN1) included in the received "Router Advertisement message" (Step S410). Specifically, first, an IP address is created from the "Router Advertisement message". Then, the PDN ID (PDN1) is stored in association with the IP address created from the address creation information transmitted from PDN1, into PDN-IP correspondence table 1104.

Also, the ASP (ASP1) corresponding to the PDN ID is stored in association with the IP address into ASP-IP correspondence table 1106. As a result, PDN-IP correspondence table 1104 and ASP-IP correspondence table 1106 are updated based on the received PDN ID.

Similarly as to PDN2, UE 10 transmits a "Router Solicitation message" to Serving GW 20 to request a "Router Advertisement message" (FIG. 20(g)).

UE 10 adds PDN2 as the PDN ID to the "Router Solicitation message". Serving GW 20 receives the "Router Solicitation message" and makes a request for address creation information to PDN-GW 50b, whose held PDN ID coincides with the PDN ID (PDN2) in the message (FIG. 20(h)).

PDN-GW 50b gives notice of the address creation information to be needed for address creation by UE 10, to Serving GW 20 (FIG. 20(i)). Serving GW 20 gives notice of the received address creation information to UE 10 through a "Router Advertisement message" (FIG. 20(j)). Here, differing from the conventional ways, the PDN ID is added to the "Router Advertisement message", which is then transmitted.

When receiving the "Router Advertisement message", UE 10 updates each correspondence table, based on the PDN ID (PDN2) included in the received "Router Advertisement message" (Step S412). Specifically, first, an IP address is created from the "Router Advertisement message". Then, the PDN ID (PDN2) is stored in association with the IP address created from the address creation information transmitted from PDN2, into PDN-IP correspondence table 1104.

Also, the ASP (ASP2) corresponding to the PDN ID is stored in association with the IP address into ASP-IP correspondence table 1106. As a result, PDN-IP correspondence table 1104 and ASP-IP correspondence table 1106 are updated based on the received PDN ID.

In the above way, the difference of the present embodiment from the first embodiment is that, initiated by the request from UE 10, Serving GW 20 makes an inquiry to PDN-GW 50 and replies the solved information to UE 10. That is, in the first embodiment, it is necessary for Serving GW 20 to hold the correspondence between the address creation information for creating an address and the PDN ID. However, in the present embodiment, it is no longer necessary to hold it, so that it is possible to reduce management information to be handled in Serving GW 20.

### [3.4 The Fourth Embodiment]

Next, the fourth embodiment will be described. The fourth embodiment is a variational example of the IPv4 address acquisition procedure described in the second embodiment and will be described with reference to FIG. 21. In the present embodiment, initiated by a address request fromUE 10 similarly to the variational example of the IPv6 address acquisition procedure described in the third embodiment, Serving GW 20 makes inquiry about an IP address to PDN-GW 50 and notifies to UE 10 the IP address obtained from PDN-GW 50.

As shown in FIG. 21, first, an Attach Procedure is executed for every ASP as has been conventionally done (FIG. 21(a)). The difference from the conventional ways is that the PDN ID is added to the completion notice of the Attach Procedure to be transmitted to UE 10 for identifying a PDN. Accordingly, when UE 10 receives the completion notice of the Attach Procedure, the UE is given notice of the PDN ID (PDN1) (Step S500). Then, UE 10 stores the correspondence between the PDN ID and the ASP.

At this point, Serving GW 20 holds the PDN ID (Step S502), thanks to the Attach Procedure.

Similarly, UE 10 performs the same procedure for PDN2. That is, when UE 10 receives a completion notice of the Attach Procedure as to PDN2, the UE is given notice of the PDN ID (PDN2) (StepS504). Then, UE 10 stores the correlation between PDN ID and the ASP.

At this point, Serving GW 20 holds the PDN ID (S506), thanks to the Attach Procedure.

Then, UE 10 requests an IP address by performing a DHCP procedure. First, UE 10 requests an IP address from PDN1. In the present embodiment, Serving GW20 behaves as a DHCP relay server so as to transfer a DHCP message from UE 10 to PDN-GW 50a.

That is, when Serving GW 20 receives a "DHCP DISCOVER message" including the PDN ID (PDN1) from UE 10, the message is transferred to PDN-GW 50a by the relaying function (FIG. 21(c')).

Also, when a "DHCP OFFER message" is received from PDN-GW 50a (FIG. 21(d')), the message is transferred to UE 10 by the relaying function (FIG. 21(d)). Similarly, when a "DHCP REQUEST message" is received from UE 10 (FIG. 21(e)), Serving GW 20 transfers the message to PDN-GW 50a by the relaying function (FIG. 21(e')).

Further, when a "DHCP PACK message" is received from PDN-GW 50a (FIG. 21(f')), the message is transferred to UE 10 by the relaying function (FIG. 21(f)).

With this procedure, UE 10 transmits and receives DHCP messages to acquire an IPv4 address. Differing from the conventional DHCP messages, in the present embodiment a PDN ID is added to a DHCP message, so that Serving GW 20 having received an address request can transfer the DHCP message to the PDN-GW 50 requested by UE 10, from a plurality of PDNs.

Further, when receiving the "DHCP PACK message", UE 10 updates each correspondence table, based on the PDN ID (PDN1) included in the received "DHCP PACK message" (Step S508). Specifically, the PDN ID (PDN1) is stored in association with the IP address notified by the "DHCP PACK message", into PDN-IP correspondence table 1104.

Also, the ASP (ASP1) corresponding to the PDN ID is stored in association with the IP address into ASP-IP correspondence table 1106. As a result, PDN-IP correspondence table 1104 and ASP-IP correspondence table 1106 are updated based on the received PDN ID.

Similarly, UE 10 makes a request for an IP address to PDN2. That is, UE 10 transmits a "DHCP DISCOVER message" including the PDN ID of PDN2 to Serving GW 20 (FIG. 21(g)).

When Serving GW 20 receives a "DHCP DISCOVER message" including the PDN ID (PDN2) from UE 10, the message is transferred to PDN-GW 50b by the relaying function (FIG. 21(g')).

Also, when a "DHCP OFFER message" is received from PDN-GW 50b (FIG. 21(h')), the message is transferred to UE 10 by the relaying function (FIG. 21(h)). Similarly, when a "DHCP REQUEST message" is received from UE 10 (FIG. 21(i)), Serving GW 20 transfers the message to PDN-GW 50b by the relaying function (FIG. 21(i')).

Further, when a "DHCP PACK message" is received from PDN-GW 50b (FIG. 21(j')), the message is transferred to UE 10 by the relaying function (FIG. 21(j)).

Further, when receiving the "DHCP PACK message", UE 10 updates each correspondence table, based on the PDN ID (PDN2) included in the received "DHCP PACK message" (Step S510). Specifically, the PDN ID (PDN2) is stored in association with the IP address notified by the "DHCP PACK message", into PDN-IP correspondence table 1104.

Also, the ASP (ASP2) corresponding to the PDN ID is stored in association with the IP address into ASP-IP correspondence table 1106. As a result, PDN-IP correspondence table 1104 and ASP-IP correspondence table 1106 are updated based on the received PDN ID.

With this, similarly to the embodiment of the IPv6 address procedure, conventionally, when a single Serving GW 20 assigns an IP address by the DHCP procedure after DHCP procedures with a plurality of PDN-GWs 50 have been completed, it was impossible for UE 10 to determine which PDN the received address was assigned from. However, according to the present embodiment, management is made possible by making the created IP address correspond to the PDN.

In the above way, the difference of the present embodiment from the second embodiment is that, initiated by the request from UE 10, Serving GW 20 makes an inquiry to PDN-GW 50 and replies the solved information to UE 10. That is, in the second embodiment, it is necessary in Serving GW 20 to hold the correspondence between the IP address to be assigned to UE 10 and the PDN ID. However, in the present embodiment, it is no longer necessary to hold it, so that it is possible to reduce management information to be handled in Serving GW 20.

### [4. Variational Examples]

In the above embodiments, UE 10 acquires the address from Serving GW 20. However, if the IP address of the PDN is identified from the PDN ID acquired by the Attach Procedure, a request message for address acquisition may be transmitted to PDN-GW 50. Specifically, since in the embodiments heretofore, the destination address of the "Router Solicitation message" is a multi-cast address, the default router or Serving GW 20 receives the message. However, by setting each PDN-GW 50 as the destination, PDN-GW 50 can receive the request directly from UE 10 and the "Router Advertisement message" may be directly replied to the UE. UE 10 can identify the PDN based on the sender address of the received "Router Advertisement message" and make the PDN correspond to the IP address.

Also, similarly for IPv4 address acquisition, the destination address of a DHCP message for requesting the address may be set to be each PDN-GW 50 instead of broad-caste message, so that the DHCP procedure can be directly implemented.

This makes it possible to identify the PDN from the address field in the IP header, and it becomes unnecessary to add a PDN ID to the request and reply messages, as compared to the aforementioned embodiments.

Specifically, it becomes unnecessary to add a PDN ID to the "Router Solicitation message" and "Router Advertisement message" for acquisition of IPv6 address information. Also, it becomes unnecessary to add a PDN ID to the DHCP messages for IPv4 address acquisition.

Other procedures are performed in the same manner as in the embodiments described heretofore so that UE 10 can connect to a plurality of ASPs and perform communications using a different IP address for each.

Though the aforementioned embodiments were described on the basis of the network that is connected via an E-UTRAN access system, the embodiments can be applied in the same manner when the connection is performed by a radio access system other than E-UTRAN such as WiMax, CDMA2000, Wireless LAN and the like, as shown in FIG. 22.

When a radio access system other than the E-UTRAN access system is used to provide a configuration, the Serving GW as the apparatus for data transfer is specified as an ePDG. Also in this case, the IP address acquisition methods of the above-described embodiments can be applied by replacing the Serving GW 20 in the above-described embodiments with the ePDG 25 as shown in FIG. 22, so that it is possible for UE 10 to make a request for an address by designating a PDN and acquire an IP address corresponding to the PDN from ePDG 25.

## Claims

1. A mobile terminal connected to a mobile communications network that is connected to one or plurality of different operator networks, via a forwarding intermediate node, comprising:
a communication means for performing communications with an operator network via a mobile communications network;
a message receiving means for receiving a predetermined message from an operator network;
an IP address acquisition means for acquiring an IP address from a message received by the message receiving means;
an operator network determining means for determining an operator network that assigned the IP address, from the message received by the message receiving means; and,
an operator-to-IP address storing means for storing the operator network determined by the operator network determining means in association with the IP address acquired by the IP address acquisition means,
wherein the communication means reads out an IP address corresponding to an operator network as a communication destination, from the operator-to-IP address storing means and uses the IP address as an IP address of the mobile terminal to perform communications with the operator network.

2. The mobile terminal according to Claim 1, further comprising:
a network identification code receiving means for receiving a network identification code from the operator network, when the communication means establishes communication with the operator network;
an operator-to-network identification code storing means for storing the network identification code received by the network identification code receiving means in association with the operator network; and
a network identification code acquisition means for acquiring a network identification code from the message received by the message receiving means,
wherein the operator network determining means determine the operator network based on the network identification code obtained by the network identification code acquisition means.

3. The mobile terminal according to Claim 2, wherein
the IP address is configured of an IPv6 address,
the message receiving means is a means that receives a Router Advertisement message from the operator network,
the IP address acquisition means is a means that acquires the IP address by creating the IP address based on the Router Advertisement message, and,
the network identification code acquisition means is a means that acquires the network identification code added to the Router Advertisement message.

4. The mobile terminal according to Claim 2, wherein
the IP address is configured of an IPv4 address,
the message receiving means is a means that receives a DHCP PACK message from the operator network,
the IP address acquisition means is a means that acquires the IP address from the DHCP PACK message, and,
the network identification code acquisition means is a means that acquires the network identification code added to the DHCP PACK message.

5. A forwarding intermediate node for relaying between one or plurality of different operator networks and a mobile communications network to which a mobile terminal is connected, comprising:
an IP address information-to-network identification code storing means for receiving IP address information and a network identification code from an operator network and stores the IP address information in association with the network identification code;
a message request signal receiving means for receiving a message request signal from a mobile terminal; and,
a message transmitting means for, when a network identification code is added to the message request signal received by the message request signal receiving means, selecting the IP address information corresponding to the network identification code based on the IP address information-to-network identification code storing means and transmitting a message added with the network identification code to the mobile terminal.

6. The forwarding intermediate node according to Claim 5, wherein the IP address information is IP address creation information for creating an IPv6 address in the mobile terminal,
the message request signal receiving means is a means that receives a Router Solicitation message from the mobile terminal, and
the message transmitting means is a means that adds the network identification code to the Router Advertisement message and transmits the message to the mobile terminal.

7. The forwarding intermediate node according to Claim 5,
wherein the IP address information is an IP address assigned from the operator network to the mobile terminal.

8. A forwarding intermediate node for relaying between one or plurality of different operator networks and a mobile communications network to which a mobile terminal is connected, comprising:
a network identification code storing means for, when establishing communications with an operator network, receiving a network identification code from the operator network and storing the code in association with the operator network;
a message request signal receiving means for receiving a message request signal from a mobile terminal;
an IP address information request signal transmitting means for, when a network identification code is added to the message request signal received by the message request signal receivingmeans, transmitting an IPaddress information request signal to an operator network corresponding to the network identification code;
an IP address information receiving means for receiving IP address information from the network operator; and,
a message transmitting means for transmitting a message including the IP address information received by the IP address information receiving means and the network identification code, to the mobile terminal.

9. A mobile communications system comprising:
one or plurality of different operator networks;
a mobile communications network;
a forwarding intermediate node for relaying between operator networks and the mobile communications network; and
a mobile terminal connected to the mobile communications network,
the forwarding intermediate node comprising:
an IP address information-to-network identification code storing means for receiving IP address information and a network identification code from the operator network and storing the IP address information in association with the network identification code;
a message request signal receiving means for receiving a message request signal from the mobile terminal; and,
a message transmitting means for, when a network ID code is added to the message request signal received by the message request signal receiving means, selecting IP address information corresponding to the network ID code based on the IP address information-to-network ID code storing means and transmitting a message added with the network ID code to the mobile terminal,
the mobile terminal comprising:
a message request signal transmitting means for transmitting the message request signal added with the network identification code, to the forwarding intermediate node;
a message receiving means for receiving the message added with the network identification code, from the forwarding intermediate node;
an IP address acquisition means for acquiring an IP address from the message received by the message receiving means;
a network identification code acquisition means for acquiring the network identification code from the message received by the message receiving means; and,
an operator-to-IP address storing means for storing the operator network corresponding to the network identification code acquired by the network identification code acquisition means, in association with the IP address,
wherein the mobile terminal reads out the IP address corresponding to the operator network as a communication destination, from the operator-to-IP address storing means and uses the IP address as the IP address of the mobile terminal to perform communications with the operator network.
